# EUROPEAN PATENT APPLICATION

(11) **EP 1 318 561 A1**
(43) Date of publication of application: **11.06.2003**
(21) Application number: 01955642.2
(22) Date of filing: 09.08.2001
(51) Int. Cl.: H01M 10/40, H01M 2/04, H01M 10/04, H01M 4/66, H01M 6/02, H01M 2/02

(54) **COIN-SHAPED BATTERY**

(30) Priority: 09.08.2000 JP 2000241678; 09.08.2000 JP 2000241679; 07.05.2001 JP 2001136015
(71) Applicant: MATSUSHITA ELECTRIC INDUSTRIAL CO., LTD., Kadoma-shi, Osaka 571-8501 (JP)
(72) Inventor: NAKANISHI, Makoto, Hirakata-shi, Osaka 573-1116 (JP); TAKAMURA, Koshi, Neyagawa-shi, Osaka 572-0085 (JP); AKIYA, Hiroyuki, Moriguchi-shi, Osaka 570-0032 (JP); KOSHIBA, Nobuharu, Ikoma-gun, Nara 636-0941 (JP)
(74) Representative: Rackham, Stephen Neil
(86) International application number: JP0106884
(87) International publication number: WO02013305

(57) **Abstract**

A coin type battery having a structure that contributes to improved discharge capacity and prevent deposition of lithium metal is provided. A positive electrode plate (7) and a negative electrode plate (8) are folded at their connecting pieces and coiled around into a flat shape to construct an electrode plate group (1) such that layer faces of the positive electrode plate (7) and layer faces of the negative electrode plate (8) are alternately layered upon one another with a separator (9) interposed therebetween, and the electrode plate group is accommodated in a battery case made of a cap case (4) having an open end and a sealing case (5) for sealing this open end. An insulating member is provided to a connecting piece of the positive electrode plate (7) that is to be located at the center when the electrode plates are coiled around, on a face opposite one end of the negative electrode plate (8).

## Description

### TECHNICAL FIELD

The present invention relates to a flat cylindrical coin type battery, and in particular, to a coin type battery constructed with an electrode plate group of a coiled structure accommodated in a coin-shaped battery case for achieving high load discharge characteristics.

### BACKGROUND ART

Small and thin coin type batteries that are also referred to as button type batteries or flat type batteries have widely been used as power sources for small or thin devices such as wrist watches and hearing aids or IC cards.

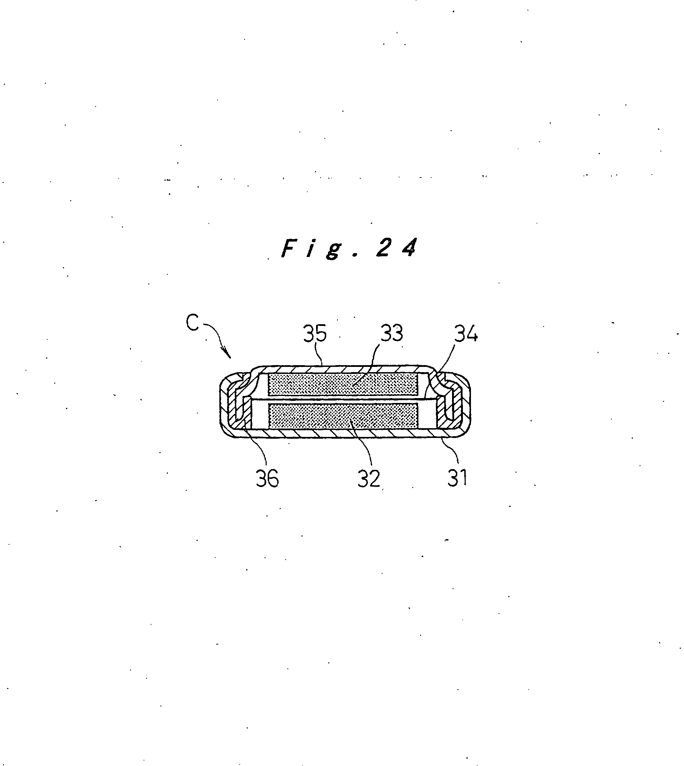

Fig. 24 illustrates a conventional coin type battery C, which is made as follows: A positive electrode pellet 32 and a negative electrode pellet 33 in disk-like form are placed in face-to-face arrangement with a separator 34 interposed between them inside a sealing case 35 of shallow, bottomed cylindrical form, liquid electrolyte is injected, a cap case 31 is coupled to the open end of the sealing case 35 with a gasket 36 fitted therebetween, and the open end edge of the cap case 31 is crimped or bent inwards so as to tightly seal the battery inner space formed between the cap case 31 and sealing case 35.

Batteries having such electrode plate structure wherein one positive electrode pellet 32 and one negative electrode pellet 33 are arranged face-to-face with each other can have only a small continuous discharge current of about 10 mA because of the small reaction area where the positive and negative electrode plates face each other, and so they have only been used for devices that require a small load current.

To achieve a large discharge current of more than several tens of mA, positive and negative electrode plates must face each other in a larger area. Various attempts have been made to increase the reaction area for other types of batteries, for example, by employing a layered structure in which a plurality of positive and negative electrode plates are layered upon one another with separators interposed therebetween, or a coiled structure in which strips of positive and negative electrode plates are coiled together with separators interposed therebetween. If electrode plates of such a layered or coiled structure were accommodated in a flat battery case having a small height, the large current discharge characteristics of coin type battery could be improved. With this in view, the applicants of the present invention have proposed a battery, which accommodates an electrode plate group of a coiled or layered structure in a flat battery case, as disclosed in Japanese Patent Laid-Open Publication No. 2000-164259.

The battery disclosed in the publication is of rectangular form in top plan view, wherein an electrode plate group that is formed into a thin prismatic shape by the coiled or layered structure is encased in a prismatic battery case. This invention could not be adopted to coin type batteries that are circular in top plan view, because accommodating rectangular electrode plate group in a circular battery case would result in insufficient battery capacity because of the low volume efficiency of the battery.

For accommodating the electrode plate group in a coin-shaped battery case, it is constructed with strips of positive and negative electrode plates made of respective collectors coated with respective active materials, which have a plurality of layer faces coupled together by connecting pieces, and which are coiled around into a flat shape by folding them at their connecting pieces, such that layer faces of the positive and negative electrode plates are alternately layered upon one another with a separator interposed in between them. The active material used for the positive electrode is a transition metal oxide such as a lithium cobaltate, and the active material used for the negative electrode is a carbon material such as graphite that is capable of absorbing and releasing lithium ions.

In batteries using the above-mentioned positive and negative electrode active materials, the potential of the graphite material at the time of charging is almost as low as the potential at which deposition of lithium occurs. When the negative electrode active material has deteriorated after repeated charge and discharge cycles, dendritic growth of lithium metal can be observed on the negative electrode plate because of the inactivating reaction between liquid electrolyte and lithium ions inserted in the negative electrode material during the charging. Consequently, these batteries have the problems of inferior safety and life characteristics because of the risk of internal short-circuiting caused by the deposition of lithium.

An object of the present invention is to provide a coin type battery having enhanced large current discharge characteristics by accommodating an electrode plate group of a coiled structure in a flat cylindrical battery case and having improved charge/discharge cycle life and safety properties by preventing troubles caused by deposition of lithium metal on the negative electrode plate.

### DISCLOSURE OF THE INVENTION

To achieve the above object, a coin type battery according to a first aspect of the present invention is characterized in that a positive electrode plate including a positive electrode collector coated with a positive electrode active material and a negative electrode plate including a negative electrode collector coated with a negative electrode active material are both formed in a strip shape having a plurality of layer faces coupled together by connecting pieces, respectively; the positive electrode plate and the negative electrode plate are folded at the respective connecting pieces and coiled around into an electrode plate group of flat form such that the layer faces of the positive electrode plate and the layer faces of the negative electrode plate are alternately layered upon one another with a separator interposed therebetween; and the electrode plate group is accommodated in a battery case including a shallow bottomed cylindrical cap case having an open end and a sealing case for sealing the open end of the cap case.

According to the first aspect of the invention, the layer faces of the positive and negative electrode plates are arranged face-to-face through the separator in several layers, i.e., the reaction area is increased, and thus the large current discharge characteristics of the battery are improved. Since the electrode plate group of this invention is formed by folding the positive and negative electrode plates at the connecting pieces for coupling their plurality of layer faces into a coil shape, it can be accommodated in a thin battery case.

A coin type battery according to a second aspect of the present invention is characterized in that a positive electrode plate including a positive electrode collector coated with a positive electrode active material and a negative electrode plate including a negative electrode collector coated with a negative electrode active material are both formed in a strip shape having a plurality of layer faces coupled together by connecting pieces, respectively; the positive electrode plate and the negative electrode plate are superposed so that respective faces of both electrode plates on which the active materials are coated face each other through a separator; the positive electrode plate and the negative electrode plate are folded alternately in opposite directions at the respective connecting pieces and compressed into an electrode plate group of flat form such that the layer faces of the positive electrode plate and the layer faces of the negative electrode plate are layered upon one another; and the electrode plate group is accommodated in a battery case including a shallow bottomed cylindrical cap case having an open end and a sealing case for sealing the open end of the cap case.

According to the second aspect of the invention, since the positive and negative electrode plates accommodated in the battery case are folded, the large current discharge characteristics of the battery are improved by the enlarged reaction area.

An electrode plate group of a coin type battery according to a third aspect of the present invention is formed as follows: a positive electrode plate including a positive electrode collector coated on both faces with a positive electrode active material and a negative electrode plate including a negative electrode collector coated on both faces with a negative electrode active material are both formed in a strip shape having a plurality of layer faces coupled together by connecting pieces, respectively; the positive electrode collector is extended from one end of the positive electrode plate to form a positive electrode lead and the negative electrode collector is extended from one end of the negative electrode plate to form a negative electrode lead; the positive electrode plate and the negative electrode plate are folded at the respective connecting pieces and coiled around into the electrode plate group of flat form such that the layer faces of the positive electrode plate and the layer faces of the negative electrode plate are alternately layered upon one another with a separator interposed therebetween, the positive electrode lead and the negative electrode lead arranged at a coiling finish end. In the coin type battery of the invention, the electrode plate group is accommodated in a battery case including a shallow bottomed cylindrical cap case having an open end and a sealing case for sealing the open end of the cap case; and a distal end of the positive electrode lead is welded to the cap case and a distal end of the negative electrode lead is welded to the sealing case.

According to the third aspect of the invention, the layer faces of the positive and negative electrode plates are arranged face-to-face through the separator in several layers, i.e., the reaction area is increased, which enables the coin type battery to be discharged at a large current. Since the positive electrode plate is connected to the cap case via the positive electrode lead, and the negative electrode plate is connected to the sealing case via the negative electrode lead, the current collecting structure is reliable. Thus, even with a rise in battery internal pressure which causes deformation in the cap case or sealing case, the internal resistance value of the battery will not rise.

An electrode plate group of a coin type battery according to a fourth aspect of the present invention is formed as follows: a positive electrode plate including a positive electrode collector coated on one face with a positive electrode active material and a negative electrode plate including a negative electrode collector coated on one face with a negative electrode active material are both formed in a strip shape having a plurality of layer faces coupled together by connecting pieces, respectively; the positive electrode collector is extended from one end of the positive electrode plate to form a positive electrode lead and the negative electrode collector is extended from one end of the negative electrode plate to form a negative electrode lead; the positive electrode plate and the negative electrode plate are superposed so that respective faces of both electrode plates on which the active materials are coated face each other through a separator; the positive electrode plate and the negative electrode plate are folded alternately in opposite directions at the respective connecting pieces and compressed into the electrode plate group of flat form such that the layer faces of the positive electrode plate and the layer faces of the negative electrode plate are layered upon one another. In the coin type battery of the invention, the electrode plate group is accommodated in a battery case including a shallow bottomed cylindrical cap case having an open end and a sealing case for sealing the open end of the cap case; and a distal end of the positive electrode lead is welded to the cap case and a distal end of the negative electrode lead is welded to the sealing case.

According to the fourth aspect of the invention, since the strip-like positive and negative electrode plates are folded into a flat electrode plate group, it can be accommodated in a thin battery case, and the enlarged reaction area between the electrode plates enables the coin type battery to be discharged at a large current. Since the positive electrode plate is connected to the cap case via the positive electrode lead, and the negative electrode plate is connected to the sealing case via the negative electrode lead, the current collecting structure is reliable. Thus, even with a rise in battery internal pressure which causes deformation in the cap case or sealing case, the internal resistance value of the battery will not rise.

An electrode plate group of a coin type battery according to a fifth aspect of the present invention is formed as follows: a positive electrode plate including a positive electrode collector coated with a positive electrode active material chiefly composed of a transition metal oxide containing lithium and a negative electrode plate including a negative electrode collector coated with a negative electrode active material for absorbing and releasing lithium are formed in a strip shape having a plurality of layer faces coupled together by connecting pieces, respectively; the positive electrode plate and the negative electrode plate are folded at the respective connecting pieces and coiled around into the electrode plate group of flat form such that the layer faces of the positive electrode plate and the layer faces of the negative electrode plate are alternately layered upon one another with a separator interposed therebetween. In the coin type battery of the invention, the electrode plate group is accommodated in a flat battery case, and the positive electrode plate of the electrode plate group includes an insulating member for covering one face of a connecting piece that is to be located at the center of the coiled electrode plate group, said one face of the connecting piece being opposite one end of the negative electrode plate.

According to the fifth aspect of the invention, an insulating member is provided for covering the positive electrode plate opposite one end of the negative electrode plate at the coiling center. Thus, the number of lithium ions released from the positive electrode plate during charge into the non-aqueous electrolyte is reduced in the vicinity of one end at the coiling center of the negative electrode plate, whereby deposition of lithium metal on the negative electrode plate is suppressed. This diminishes the deterioration of charge and discharge cycle life and the degradation of safety properties resulting from electrodeposition or dendritic growth of lithium metal.

An electrode plate group of a coin type battery according to a sixth aspect of the present invention is formed as follows: a positive electrode plate including a positive electrode collector coated with a positive electrode active material chiefly composed of a transition metal oxide, and a negative electrode plate including a negative electrode collector coated with a negative electrode active material for absorbing and releasing lithium are formed in a strip shape having a plurality of layer faces coupled together by connecting pieces, respectively; the positive electrode plate and the negative electrode plate are folded at the respective connecting pieces and coiled around into the electrode plate group of flat form such that the layer faces of the positive electrode plate and the layer faces of the negative electrode plate are alternately layered upon one another with a separator interposed therebetween. In the coin type battery of the invention, the electrode plate group is accommodated in a flat battery case, and the positive electrode plate of the electrode plate group includes an uncoated portion where no positive electrode active material is applied in one face of a connecting piece that is to be located at the center of the coiled electrode plate group, said one face of the connecting piece being opposite one end of the negative electrode plate.

According to the sixth aspect of the invention, an uncoated portion is provided on the inner face of the connecting piece of the positive electrode plate that faces one end at the coiling center of the negative electrode plate, where deposition of lithium metal is most likely to occur, is not coated with the positive electrode active material. Thereby, the number of lithium ions released from the positive electrode plate during charge into the non-aqueous electrolyte is reduced in the vicinity of the coiling end of the negative electrode plate. This diminishes the deterioration of charge and discharge cycle life and the degradation of safety properties resulting from deposition of lithium metal on the surface of negative electrode plate.

An electrode plate group of a coin type battery according to a seventh aspect of the present invention is formed as follows: a positive electrode plate including a positive electrode collector coated with a positive electrode active material chiefly composed of a transition metal oxide and a negative electrode plate including a negative electrode collector coated with a negative electrode active material for absorbing and releasing lithium are formed in a strip shape having a plurality of layer faces coupled together by connecting pieces, respectively; the positive electrode plate and the negative electrode plate are folded at the respective connecting pieces and coiled around into the electrode plate group of flat form such that the layer faces of the positive electrode plate and the layer faces of the negative electrode plate are alternately layered upon one another with a separator interposed therebetween. In the coin type battery of invention, the electrode plate group is accommodated in a flat battery case, and the negative electrode plate of the electrode plate group includes an insulating member for covering one end thereof that is to be located at the center of the coiled electrode plate group.

According to the seventh aspect of the invention, one end of the negative electrode plate at the coiling center, where deposition of lithium metal is most likely to occur, is covered by the insulating member, to prevent deposition of lithium metal on the surface of the negative electrode plate. This diminishes the deterioration of charge and discharge cycle life and the degradation of safety properties resulting from the electrodeposition.

### BRIEF DESCRIPTION OF THE DRAWINGS

Fig. 1 is a cross section illustrating the structure of a coin type battery A according to a first embodiment of the present invention;
Fig. 2 is a top plan view illustrating the structure of the coin type battery A;
Fig. 3A shows a spread-out positive electrode plate to illustrate its structure, and Fig. 3B shows a spread-out negative electrode plate to illustrate its structure;
Fig. 4 is a model view for showing how the electrode plates are coiled around;
Fig. 5A shows a spread-out positive electrode plate of a coin type battery B to illustrate its structure, and Fig. 5B shows a spread-out negative electrode plate to illustrate its structure;
Fig. 6A is a top plan view illustrating the structure of the coin type battery B, and Fig. 6B is a cross section thereof;
Fig. 7A and Fig. 7B are spread-out views of modified examples of electrode plates;
Fig. 8A is an explanatory view illustrating the structure of an electrode plate group of a folded structure, and Fig. 8B is a diagram illustrating the structure of the electrode plates;
Fig. 9A is a top plan view of a positive electrode plate of a folded structure, and Fig. 9B is a top plan view of a negative electrode plate;
Fig. 10 is a graph showing the measurement results of discharge capacity percentage rates;
Fig. 11 a cross section illustrating the structure of a coin type battery D according to a second embodiment of the invention;
Fig. 12A shows a spread-out positive electrode plate to illustrate its structure, and Fig. 12B shows a spread-out negative electrode plate to illustrate its structure;
Fig. 13 is a model view for showing how the electrode plates are coiled around;
Fig. 14A is an explanatory view illustrating the structure of an electrode plate group of a folded structure, and Fig. 14B and Fig. 14C are diagrams illustrating the structure of the electrode plates;
Fig. 15A is a top plan view of a positive electrode plate of a folded structure, and Fig. 15B is a top plan view of a negative electrode plate;
Fig. 16 is a graph showing changes in the internal resistance of batteries stored in a high temperature environment;
Fig. 17 is a graph showing changes in the overall height of batteries in a high temperature environment;
Fig. 18A shows a spread-out positive electrode plate according to a third embodiment of the invention to illustrate its structure, and Fig. 18B shows a spread-out negative electrode plate to illustrate its structure;
Fig. 19 is a model view illustrating the structure of the electrode plate group;
Fig. 20A shows a spread-out positive electrode plate according to a fourth embodiment of the invention to illustrate its structure, and Fig. 20B shows a spread-out negative electrode plate to illustrate its structure;
Fig. 21 is a model view illustrating the structure of the electrode plate group;
Fig. 22A shows a spread-out positive electrode plate according to a fifth embodiment of the invention to illustrate its structure, and Fig. 22B shows a spread-out negative electrode plate to illustrate its structure;
Fig. 23 is a model view illustrating the structure of the electrode plate group; and
Fig. 24 is a cross section illustrating the structure of a conventional coin type battery.

### BEST MODE FOR CARRYING OUT THE INVENTION

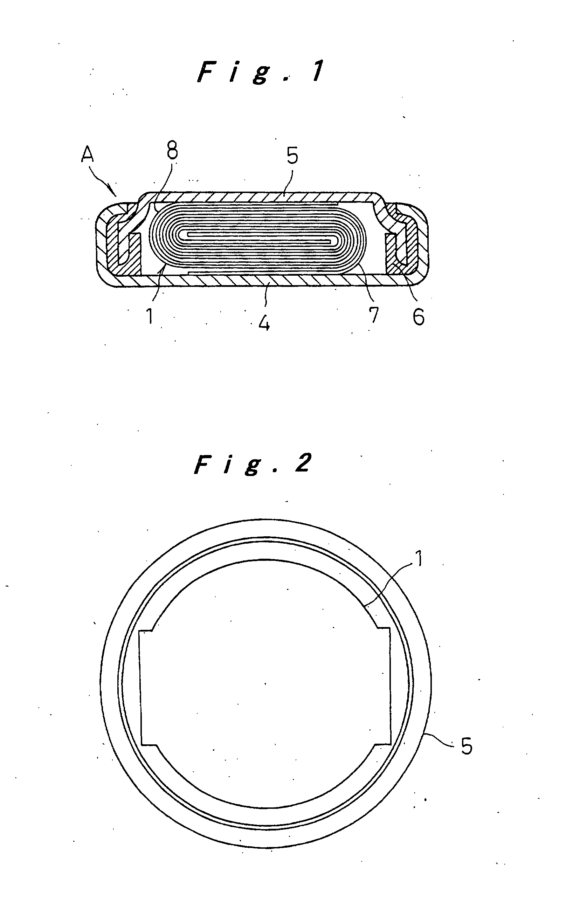

Coin type batteries according to the following embodiment will be described as lithium ion rechargeable batteries, as one example. The coin type battery A according to a first embodiment includes a battery case comprised of a shallow bottomed cylindrical cap case 4 and a sealing case 5 for closing the open end of the cap case 4 with a gasket 6 fitted therebetween, and an electrode plate group 1 of a coiled structure accommodated in this battery case, as shown in Fig. 1.

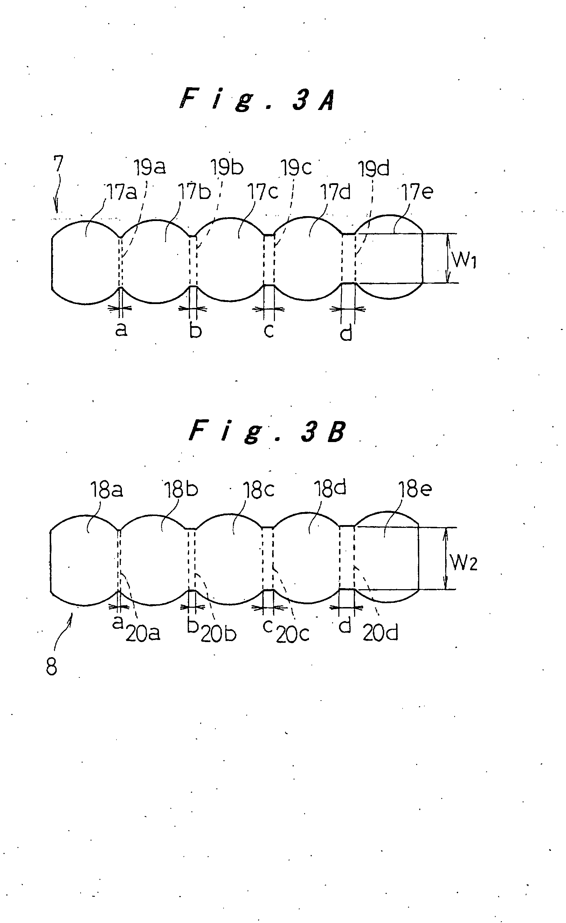

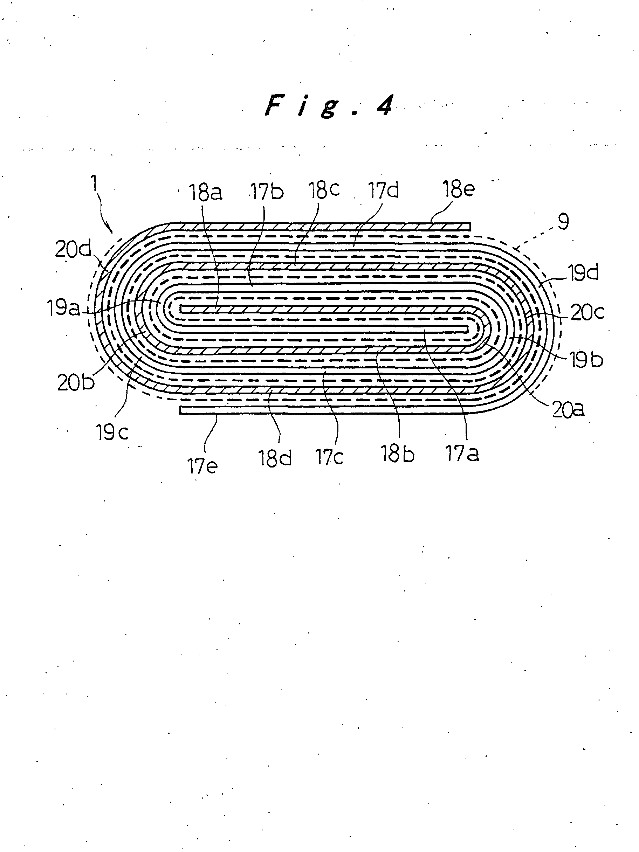

The electrode plate group 1 is formed to be substantially circular in top plan view as shown in Fig. 2 so that there is no unused space left when it is placed inside a circular space of the sealing case 5. That way, the battery has a large capacity per volume. The electrode plate group 1 is formed of a positive electrode plate 7 shown in Fig. 3A and a negative electrode plate 8 shown in Fig. 3B that are coiled around into a flat shape with a separator 9 interposed therebetween, as shown in Fig. 4.

The positive electrode plate 7 is made of a punched plate material, which is obtained by coating positive electrode active materials on both sides of aluminum foil that constitutes a positive electrode collector, and formed into a strip having a predetermined number of layer faces 17a-17e formed with arcs in the widthwise directions and coupled together by connecting pieces 19a-19d as shown in Fig. 3A. The negative electrode plate 8 is made of a punched plate material, which is obtained by coating negative electrode active materials on both sides of copper foil that constitutes a negative electrode collector, and formed into a strip having a predetermined number of layer faces 18a-18e formed with arcs in the widthwise directions and coupled together by connecting pieces 20a-20d as shown in Fig. 3B. The width of the negative electrode plate 8 is slightly larger than that of the positive electrode plate 7, so that there will be no decrease in the reaction area even when the positive electrode layer faces 17a-17e are not in exact register with the negative electrode layer faces 18a-18e.

The positive and negative electrode plates 7 and 8 are coiled around into a flat shape by folding them at their respective connecting pieces 19a-19d and 20a-20d such that the positive electrode layer faces 17a-17e and negative electrode layer faces 18a-18e are alternately layered to face each other through the separator 9. The separator 9 is made of microporous polyethylene film and formed as a tape having a larger width than that of the negative electrode plate 8. After coiling the positive and negative electrode plates 7 and 8 with the separator 9, the four corners of the separator are cut off along an arc, so that the complete electrode plate group 1 is of a disk-like shape.

In order to coil the electrode plates so that the layer faces 17a-17e and 18a-18e of both positive and negative electrode plates 7, 8 are in exact register, the connecting pieces 19a-19d and 20a-20d of both electrode plates need to have increasing lengths along the connecting direction such that connecting pieces on the outer side of the coiling are longer. As shown in Fig. 3A and Fig. 3B, the length (a) of the connecting pieces at the coiling start end is increased stepwise to the length (d) of the connecting piece at the coiling finish end, each by the sum of the thicknesses of the positive and negative electrode plates 7, 8 and separator 9.

The width W1 of the connecting pieces 19a-19d of the positive electrode and width W2 of the connecting pieces 20a-20d of the negative electrode need to be largest possible so as to prevent a decrease in the battery voltage during charge and discharge with a large current. In other words, it is preferable that the widths W1 and W2 of the positive and negative electrode connecting pieces 19a-19d and 20a-20d be small so as to accommodate the electrode plate group 1 within the circular space in the sealing case 5 as shown in Fig. 2 with good volume efficiency, but on the other hand, if they are too small the voltage may drop largely. Therefore the widths W1, W2 of the positive and negative connecting pieces 19a-19d and 20a-20d should be determined to achieve a good balance between these requirements.

The electrode plate group 1 constructed as described above is accommodated in the sealing case 5 fitted with the gasket 6 at its lateral periphery as shown in Fig. 1. The sealing case 5 is then filled with liquid electrolyte, and the cap case 4 is coupled upon the open end of the sealing case 5, with the gasket 6 therebetween. The open end edge of the cap case 4 is crimped or bent inwards, whereby the gasket 6 is compressed, so as to tightly seal the battery inner space. The coin type battery A is thus finished. The gasket 6 functions not only as a sealing material for sealing the battery inner space but also as an insulating material for providing insulation between the cap case 4 that acts as the positive terminal of the coin type battery A and the sealing case 5 that acts as the negative terminal. The positive electrode plate 7 and negative electrode plate 8 thus need to be electrically connected to the cap case 4 and the sealing case 5, respectively. This electrical connection between the positive electrode plate 7 and the cap case 4 and between the negative electrode plate 8 and the sealing case 5 is achieved here by pressure contact.

That is, the positive electrode plate 7 is in pressure contact with the cap case 4, and the negative electrode plate 8 is in pressure contact with the sealing case 5, whereby electrical connection between them is established. The layer face 17e of the positive electrode plate 7 that becomes the outermost layer when coiled around is not coated with the positive electrode active material on both faces or on its outer face so that its core material that functions as the positive electrode collector is exposed. Likewise, the layer face 18e of the negative electrode plate 8 that becomes the outermost layer when coiled around is left uncoated so that the negative electrode collector is exposed. Therefore, when the positive and negative electrode plates 7 and 8 are coiled around into the electrode plate group 1, the positive electrode collector is exposed on one side face and the negative electrode collector is exposed on the other side face. The electrode plate group 1 is accommodated in the sealing case 5 so that the side on which the negative electrode collector is exposed is brought in contact with the bottom face of the sealing case 5. When the cap case 4 is coupled onto the sealing case 5 with the gasket 6 therebetween and its open end edge crimped or bent inwards, the sealing case 5 is pressed towards the cap case 4. Thus, the electrode plate group 1 is compressed between the sealing case 5 and cap case 4, whereby the positive and negative electrode collectors are brought into pressure contact with the cap case 4 and sealing case 5, respectively. Pressure contact between the negative electrode plate and the sealing case 5 and between the positive electrode plate and the cap case 4 need not necessarily be made by exposing the collectors of both electrodes, i.e., respective active material faces of the positive and negative electrode plates may be brought in pressure contact with the cap case 4 and sealing case 5, respectively.

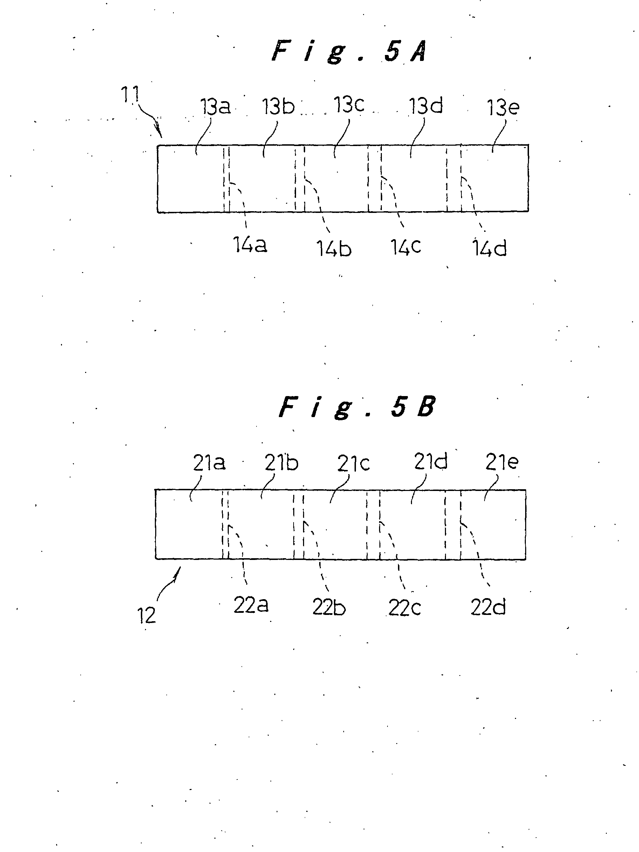

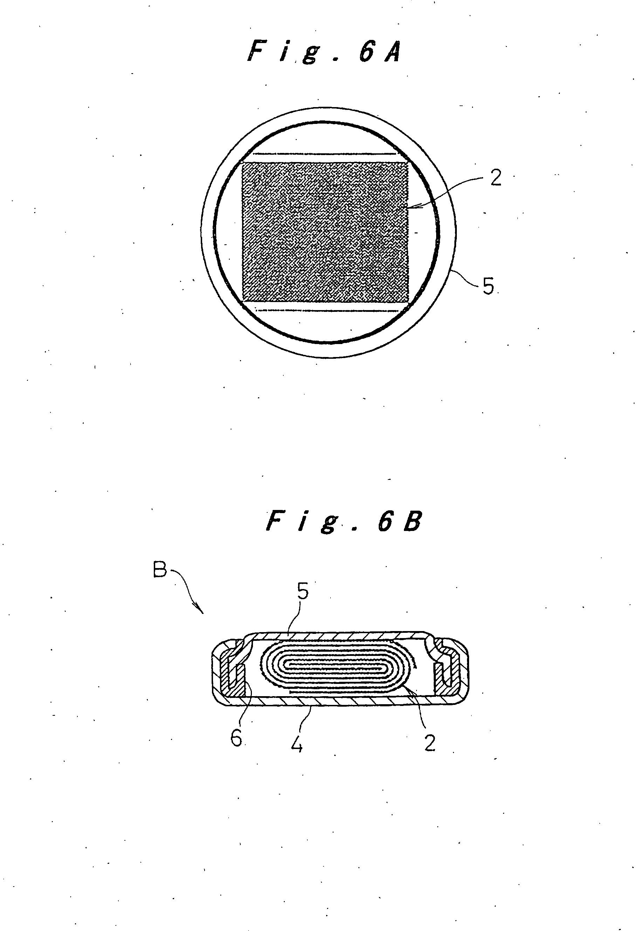

The positive and negative electrode plates 7 and 8 shown in Fig. 3A and Fig. 3B are punched out from plate materials as noted above. Punching of such a shape having a series of arcs leaves a considerable amount of remainder and so is wasteful in terms of material utilization. The most efficient way of using the material would be to form the positive and negative electrodes 11 and 12 in a tape-like shape as shown in Fig. 5A and Fig. 5B in which the layer faces 13a-13e and connecting pieces 14a-14d have the same width. However, an electrode plate group 2 obtained by coiling around such tape-like positive and negative electrode plates 11 and 12 will be of square form in top plan view, and a coin type battery B having such electrode plate group accommodated in a circular sealing case 5 will be much lower in volume efficiency compared to the coin type battery A described above, as can be seen from Fig. 6A and Fig. 6B. Nevertheless, such battery still exhibits much more superior discharge characteristics than batteries of the conventional structure, which will be described in more detail later.

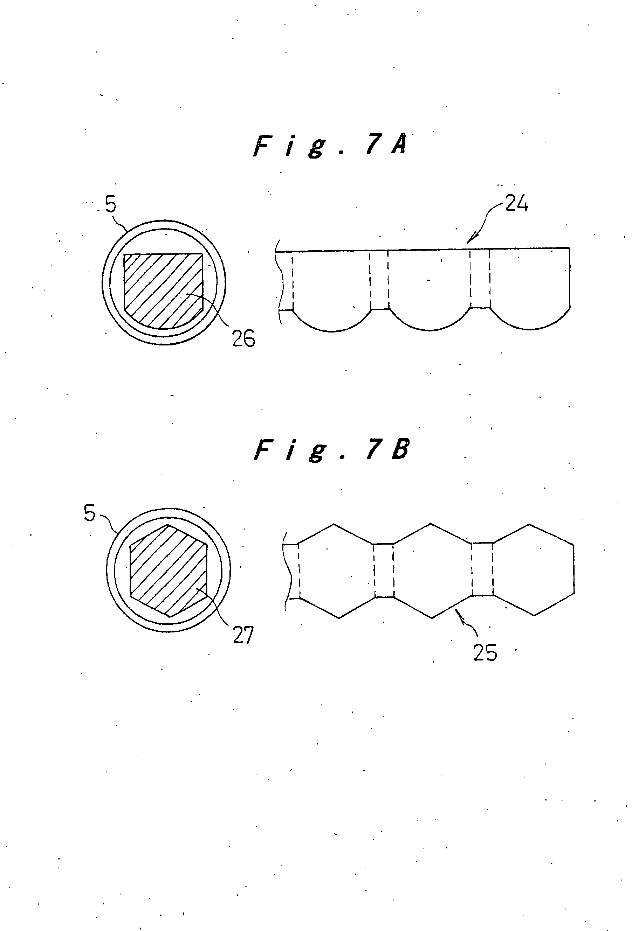

The electrode plates should preferably be so configured as to achieve good volume efficiency, but at the same time they should be produced with as little waste in material as possible to achieve good cost performance. Fig. 7A and Fig. 7B illustrate examples of the shapes that can be employed for the electrode plates that achieve a good balance between these requirements. The positive or negative electrode plate 24 shown in Fig. 7A is formed straight on one side in the widthwise direction. Thus, punching a pair of electrode plates 24 aligned along their straight sides will result in less remainders of plate material. The other side of the electrode plate 24 is formed in arcs, so it can contribute to improved volume efficiency when coiled into the electrode plate group 26 and accommodated in the sealing case 5. The electrode plate 25 shown in Fig. 7B is configured as coupled polygons. Such shape enables an arrangement that will allow a large number of electrode plates 25 to be punched out from the plate material with much less remainders. Such shape of the electrode plate 25 also contributes to improved volume efficiency when coiled into the electrode plate group 27 and accommodated in the sealing case 5.

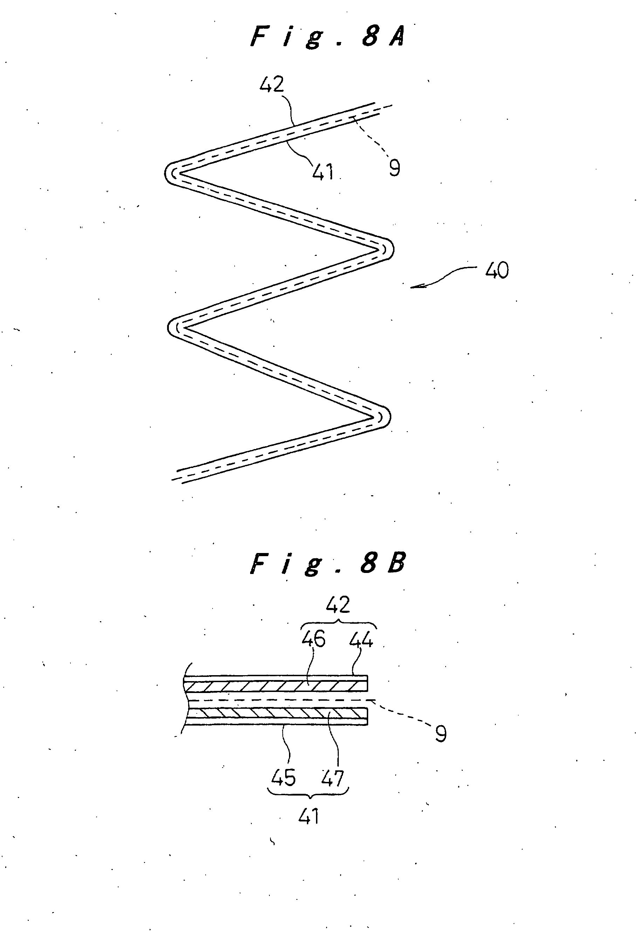

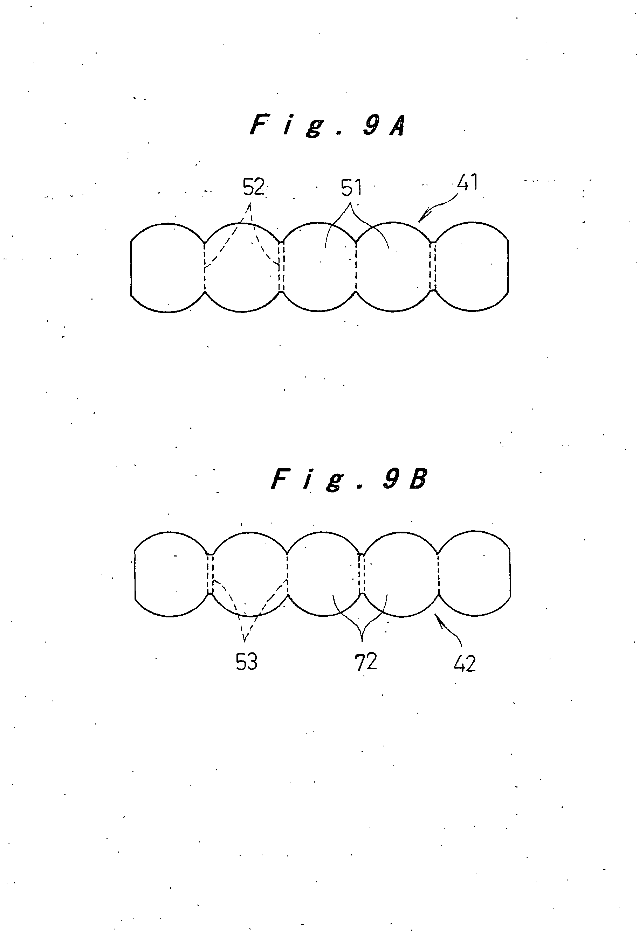

Fig. 8A shows an electrode plate group 40 of a folded structure, having a positive electrode plate 41 and a negative electrode plate 42 in face-to-face arrangement with a separator 9 placed therebetween. As shown in Fig. 8B, the positive electrode plate 41 is composed of a collector 45 and an active material layer 47 formed on one face of the collector, and the negative electrode plate 42 is composed of a collector 44 and an active material layer 46 formed on one face of the collector. These faces of electrode plates coated with respective active materials 46, 47 are arranged face-to-face with the separator 9 interposed therebetween. The positive electrode plate 41 is formed in a strip shape having positive electrode layer faces 51 formed in arcs on both sides and coupled together by connecting pieces 52 as shown in Fig. 9A. The negative electrode plate 42 is formed in a strip shape having negative electrode layer faces 72 formed in arcs on both sides and coupled together by connecting pieces 53 as shown in Fig. 9B.

These positive and negative electrode plates 41 and 42 are folded alternately in opposite directions at their connecting pieces 52 and 53 as shown in Fig. 8A, so that the folded and compressed electrode plate group 40 will appear in top plan as shown in Fig. 2. This electrode plate group 40 has its negative electrode plate 42 on one side face and the positive electrode plate 41 on the other side face, where positive and negative electrode active materials 47 and 46 are not coated and their respective collectors 45 and 44 are exposed. Thus, when it is accommodated in the cap case 4 with its positive electrode collector 45 exposed on the side of the cap case 4 and the open end of the cap case 4 is sealed by the sealing case 5 with the gasket 6 interposed therebetween, the positive electrode collector 45 and negative electrode collector 44 will be brought into pressure contact with the cap case 4 and sealing case 5, respectively, whereby electrical connection therebetween is established.

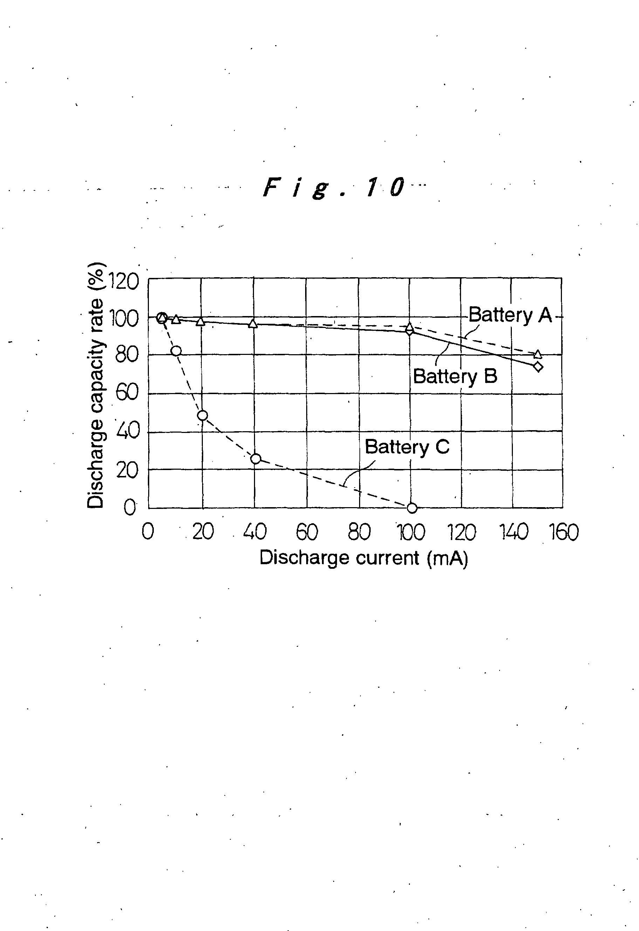

The following is a description of discharge characteristics of coin type batteries A and B constructed with the electrode plate groups 1 and 2 of the coiled structure as described in the embodiment above in comparison with the discharge characteristics of a coin type battery C using the conventional pellet type electrode plates. All these batteries were formed in a coin shape of 30 mm diameter and 3.2 mm thickness.
(1) Preparation of coin type battery A
   3 parts by weight of polyvinilydene fluoride were dissolved in 38 parts by weight of N-methylpyrrolidone, and 50 parts by weight of LiCoO₂ as an active material and 9 parts by weight of graphite as a conductive agent were added thereto, mixed, and dispersed in an inactive gas atmosphere to form positive electrode material mixture. The mixture was applied onto both surfaces of a 20 µm thickness aluminum foil in an air atmosphere to form active material layers of uniform thickness. The aluminum foil carrying the active material layers was rolled to a thickness of 180 µm to form positive electrode plate material, which was then dried at 120°C for an hour, after which positive electrode plates 7 were punched out therefrom. The positive electrode plates 7 were of the shape shown in Fig. 3A, the width of the positive electrode layer faces 17a-17e being 22 mm.
   Meanwhile, 59 parts by weight of cokes sintered at 2500°C were added to a solution of 3 parts by weight of polyvinilydene fluoride in 38 parts by weight of N-methylpyrrolidone, and mixed and dispersed in an inactive gas atmosphere to form negative electrode material mixture. The mixture was applied onto both surfaces of a 20 µm thickness copper foil in an air atmosphere to form active material layers of uniform thickness. The copper foil carrying the active material layers was rolled to a thickness of 200 µm to form negative electrode plate material, which was then dried at 120°C for an hour, after which negative electrode plates 8 were punched out therefrom. The negative electrode plates 8 were of the shape shown in Fig. 3B, the width of the negative electrode layer faces 18a-18e being 24 mm.
   The positive and negative electrode plates 7 and 8 prepared as described above were coiled around with 25 µm thickness microporous polyethylene films placed therebetween such that the layer faces 17a-17e and 18a-18e of respective electrode plates were layered, to form electrode plate groups 1 of about 2.8 mm thickness. The electrode plate groups 1 were then accommodated in sealing cases 5, and 500 µl of 1M LiFF₆/EC-EMC electrolyte was injected. The open end of the sealing cases 5 was sealed by cap cases 4, with gaskets 6 fitted therebetween. This encasing operation was conducted in a dry air atmosphere. The electrical connection between the electrode plate groups 1 and the cap cases 4/sealing cases 5 was established by pressure contact therebetween.
(2) Preparation of coin-type battery B
   The positive and negative electrode plate materials were prepared in the same way as those for the coin type battery A. The positive electrode plates 11 were formed to be 17 mm in width and 105 mm in length, the negative electrode plates 12 were formed to be 18 mm in width and 107 mm in length, 25 µm thickness microporous polyethylene films were placed therebetween, and they were coiled around such that layer faces 13a-13e and 21a-21e of respective electrode plates were layered, to form electrode plate groups 2 of about 2.8 mm thickness. The electrode plate groups 2 were then accommodated in sealing cases 5, and 500 µl of 1M LiPF₆/EC-EMC electrolyte was injected. The open end of sealing cases 5 was sealed by cap cases 4, with gaskets 6 fitted therebetween. The electrical connection between the electrode plate groups 2 and the cap cases 4/sealing cases 5 was established by pressure contact therebetween.
(3) Preparation of coin-type battery C
   Positive electrode pellets 32 were prepared as follows: 5 parts by weight of PTFE were dispersed in water, and 85 parts by weight of LiCoO₂ as an active material and 10 parts by weight of graphite as a conductive agent were added thereto, mixed, dispersed, and then dried by hot air at 100°C for two hours to obtain positive electrode mixture. 1400 mg of the positive electrode mixture was filled in a pellet mold of 25 mm diameter, and pressed at a pressure of 5 tons to form pellets, which were then dried by hot air at 200°C for five hours.
   Negative electrode pellets 33 were prepared as follows: 5 parts by weight of SBR were dispersed in water, and 95 parts by weight of cokes sintered at 2500°C as an active material were added thereto, mixed, dispersed, and then dried by hot air at 100°C for two hours to obtain negative electrode mixture. 600 mg of the negative electrode mixture was filled in a pellet mold of 25 mm diameter, and pressed at a pressure of 5 tons to form pellets, which were then dried by hot air at 110°C for five hours.
   The negative electrode pellets 33 were inserted into assembled components consisting of polypropylene gaskets 36 and sealing cases 35 as shown in Fig. 24, and 150 µm thickness separators 34 of polyethylene non-woven cloth were placed thereon. After 500 µl of 1M LiPF₆/EC-EMC electrolyte was injected, the positive electrode pellets 32 were encased, and cap cases 31 were coupled to the sealing cases 35 and crimped to seal the sealing cases.
   Ten cells each of these coin type batteries A, B, and C were prepared and the initial internal resistance and discharge load characteristics were measured. The results are shown in Table 1 and Fig. 10.

### [Initial Internal Resistance]

In order to stabilize the batteries A, B, and C, they were charged and discharged two times at constant current of 3 mA between 4.2V and 3.0V. The charging was stopped at 4.2V, and the internal resistance at this time detected using a 1. kHz alternating constant current source was determined as initial internal resistance. As shown in Table 1, the coin type batteries A and B according to the present invention having larger electrode plate areas had lower internal resistance and were more stable than the coin type battery C of the conventional structure.

**[Table 1]**

| Battery Internal Resistance | Battery A | Battery B | Battery C |
|---|---|---|---|
| Mean Value | 0.3 | 0.4 | 4.5 |

### [Discharge Load Characteristics]

After evaluating the initial internal resistance of the coin type batteries A and B, and C, they were charged at constant current of 3 mA between 4.2V and 3.0V until the voltage was 4.2V, to be provided for the discharge load characteristics test. More specifically, discharge capacity of each battery at discharge loads of 5, 10, 20, 40, 100, and 150 mA was measured. The terminal voltage at each discharge current value was set 3.0V. Fig. 10 is a plot of discharge capacity at each current value shown in percentage rates, provided that the discharge capacity was 100% at 5 mA. As can be seen from Fig. 10, the discharge capacity rate of the coin type battery C using pellet type electrode plates reduced to about 80% at 10 mA and about 20% at 50 mA. At 100 mA, there was barely any discharge capacity. In contrast, discharge capacity of more than 90% was maintained even at a discharge current of 100 mA in the coin type batteries A and B of the present invention.

The above-described coin type batteries A, B, and C are rechargeable batteries, but they can be constructed as primary batteries, which will have similar discharge characteristics.

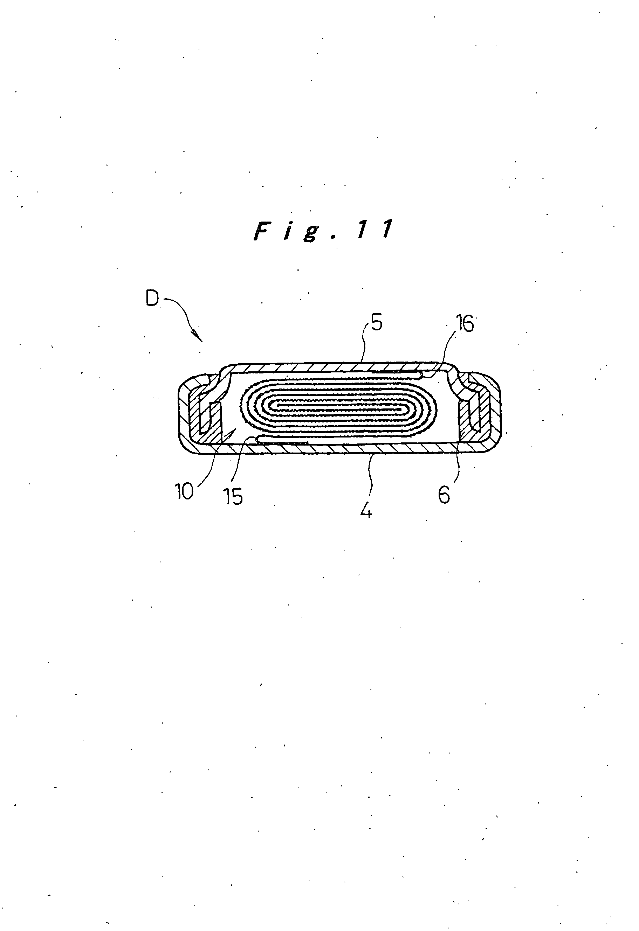

Next, a coin type battery according to a second embodiment of the present invention will be described. Similarly to the first embodiment, the coin type battery will be described as one example as a lithium ion rechargeable battery. The coin type battery D according to the second embodiment includes a battery case comprised of a shallow bottomed cylindrical sealing case 5 and a cap case 4 for closing the open end of the sealing case 5 with a gasket 6 interposed therebetween, and an electrode plate group 10 of a coiled structure accommodated in the battery case, as shown in Fig. 11. Like elements are given the same reference numerals as those in the first embodiment.

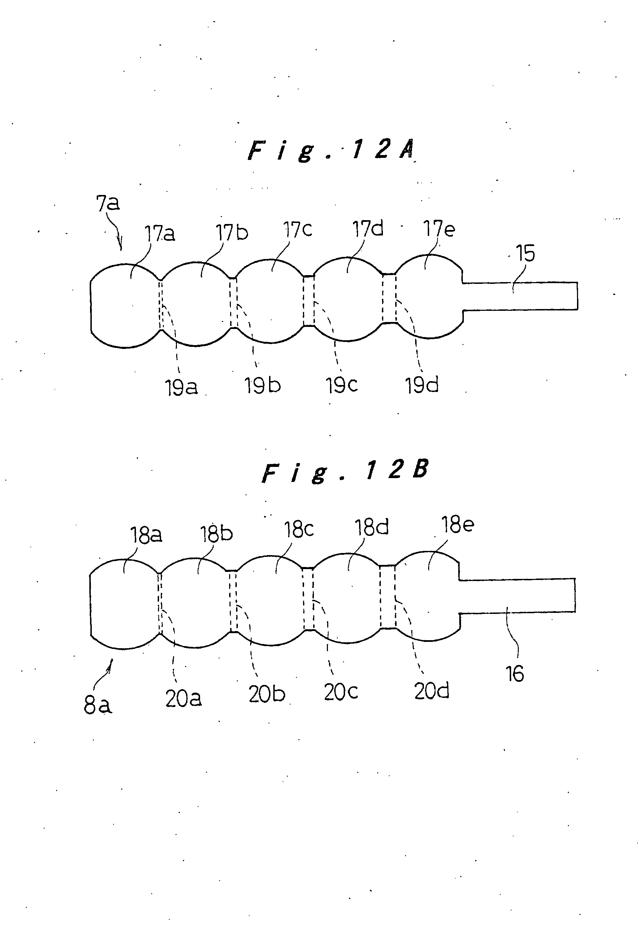

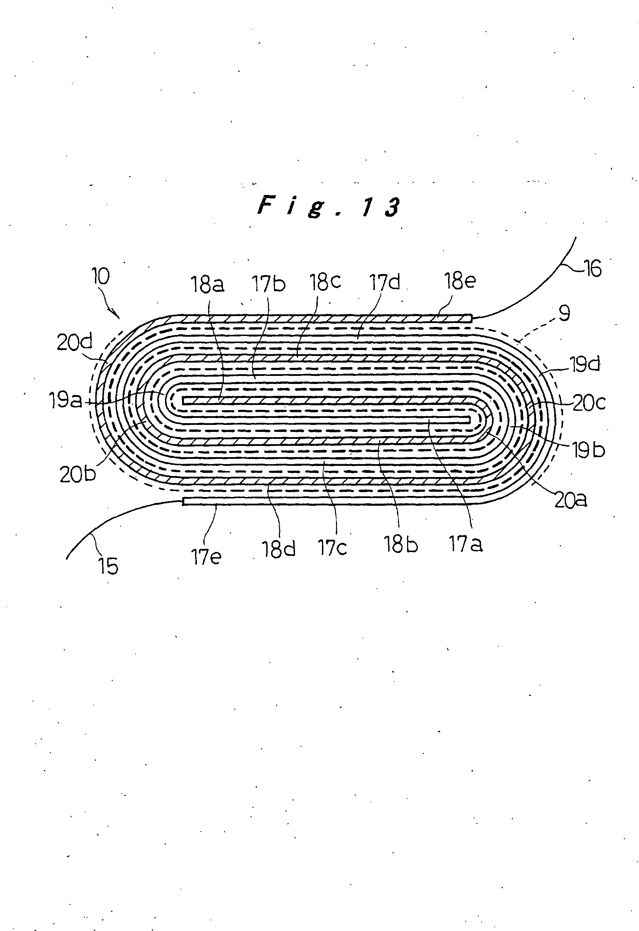

The electrode plate group 10 is formed of a positive electrode plate 7a shown in Fig. 12A and a negative electrode plate 8a shown in Fig. 12B are around with a separator 9 interposed therebetween, as shown in Fig. 13. The positive electrode plate 7a is made of a punched plate material, which is obtained by coating positive electrode active materials on both sides of aluminum foil that constitutes a positive electrode collector, and formed into a strip having a predetermined number of layer faces 17a-17e formed with arcs in the widthwise directions and coupled together by connecting pieces 19a-19d as shown in Fig. 12A. A positive electrode lead 15 consisting of exposed part of the positive electrode collector where no active materials have been applied is provided at one end. The negative electrode plate 8a is made of a punched plate material, which is obtained by coating negative electrode active materials on both sides of copper foil that constitutes a negative electrode collector, and formed into a strip having a predetermined number of layer faces 18a-18e formed with arcs in the widthwise directions and coupled together by connecting pieces 20a-20d as shown in Fig. 12B. A negative electrode lead 16 consisting of exposed part of the negative electrode collector where no active materials have been applied is provided at one end. The width of the negative electrode plate 8a is slightly larger than that of the positive electrode plate 7a, so that there will be no decrease in the reaction area even when the positive electrode layer faces 17a-17e are not in exact register with negative electrode layer faces 18a-18e.

The positive and negative electrode plates 7a and 8a are coiled around into a flat shape by folding them at their respective connecting pieces 19a-19d and 20a-20d such that the positive electrode layer faces 17a-17e and negative electrode layer faces 18a-18e are layered to face each other through the separator 9. The separator 9 is made of microporous polyethylene film and formed as a tape having a larger width than that of the negative electrode plate 8a. After coiling the positive and negative electrode plates 7a and 8a with the separator 9, the four corners of the separator are cut off along an arc, so that the complete electrode plate group 10 is of a disk-like shape.

In order to coil the positive and negative electrode plates 7a and 8a so that their layer faces 17a-17e and 18a-18e are in exact register, the connecting pieces 19a-19d and 20a-20d of both electrode plates need to have increasing lengths along the connecting direction such that connecting pieces on the outer side of the coiling are longer. As shown in Fig. 12A and Fig. 12B, the length of the connecting pieces at the coiling start end is increased stepwise to the length of the connecting pieces at the coiling finish end, each by the sum of the thicknesses of the positive and negative electrode plates 7a and 8a and separator 9.

A distal end part of the positive electrode lead 15 from the electrode plate group 10 is welded to an inner face of the cap case 4, and a distal end part of the negative electrode lead 16 is welded to an inner face of the sealing case 5. Aluminum foil is normally adopted as a collector of the positive electrode when lithium cobaltate is used as the active material, so the positive electrode lead 15 is made of aluminum. However, the cap case 4 is most commonly made of stainless steel, to which an aluminum component is not readily welded. In view of this, in this embodiment, the cap case 4 is made of a clad material consisting of aluminum on its inner side and stainless steel on its outer side. As the positive electrode lead 15 and cap case 4 are both made of aluminum, the welding is made reliable. Ultrasonic welding is preferable for even more reliable welding. The negative electrode lead 16 is made of copper, since copper foil is normally adopted as a collector of the negative electrode, and it is welded to the sealing case 5 of stainless steel by resistance welding or ultrasonic welding.

When welding the negative electrode lead 16 to the sealing case 5, it is preferable to place a plate of stainless steel or nickel upon the negative electrode lead 16 set on the inner face of the sealing case 5, so as to ensure the welding of the copper foil lead 16 of negative electrode.

After welding the negative electrode lead 16 to the sealing case 5 and the positive electrode lead 15 to the cap case 4, the electrode plate group 10 is accommodated in the sealing case 5 such that both leads 15 and 16 are folded. The sealing case 5 is then filled with liquid electrolyte, and the open end of the sealing case 5 is tightly sealed by the cap case 4, with the gasket 6 fitted therebetween, to form the coin type battery D. The cap case 4 constitutes the positive terminal of the coin type battery D, and the sealing case 5 the negative terminal. They are insulated from each other by the gasket 6.

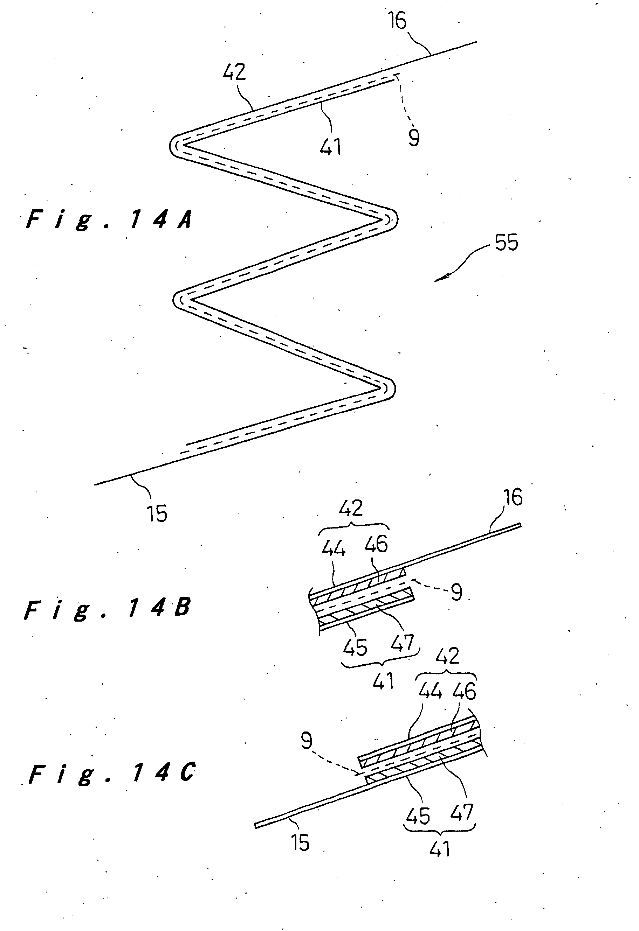

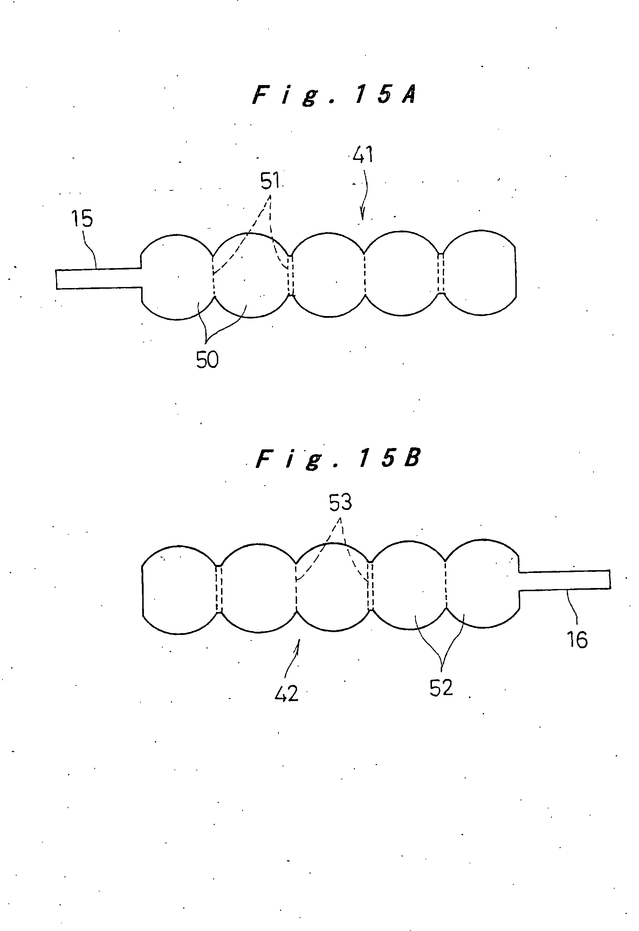

Fig. 14A to Fig. 14C illustrate an electrode plate group 55 of a folded structure. As shown in the enlarged views of lead portions in Fig. 14B and Fig. 14C, the positive electrode plate 41 is composed of a collector 45 and a positive electrode active material layer 47 formed on one face of the collector, and the negative electrode plate 42 is composed of a collector 44 and a negative electrode active material layer 46 formed on one face of the collector. An extension from one end of the collector 45 of the positive electrode plate 41 forms the positive electrode lead 15, and an extension from the other end of the collector 44 of the negative electrode plate 42 forms the negative electrode lead 16. The positive electrode plate 41 is formed in a strip shape having layer faces 50 formed in arcs on both sides and coupled together by connecting pieces 51 as shown in Fig. 15A. The negative electrode plate 42 is formed in a strip shape having layer faces 52 formed in arcs on both sides and coupled together by connecting pieces 53 as shown in Fig. 15B.

These positive and negative electrode plates 41 and 42 are folded alternately in opposite directions at their connecting pieces 51 and 53 as shown in Fig. 14A, so that the faces of electrode plates coated with respective active materials are arranged face-to-face through the separator 9. The folded and compressed electrode plate group 55 will appear in top plan as the electrode plate group 1 shown in Fig. 2. After welding the positive electrode lead 15 to the cap case 4 and the negative electrode lead 16 to the sealing case 5, this electrode plate group 55 is accommodated in the cap case 4. The cap case 4 is sealed by the sealing case 5, with the gasket 6 fitted therebetween. The finished coin type battery has an enlarged face area between the positive and negative electrodes.

The following is a description of results of comparison test between battery D using an electrode plate group 10 of the coiled structure shown in Fig. 11 in which the positive and negative electrode leads 15 and 16 are connected to the cap case 4 and the sealing case 5, respectively, by welding, and battery A using the electrode plate group of the coiled structure shown in Fig. 1 in which the positive and negative electrode plates are connected to the cap case and sealing case, respectively, by pressure contact. Both batteries were formed in a coin shape of 30 mm diameter and 3.2 mm thickness.
(1) Preparation of coin type battery D 3 parts by weight of polyvinilydene fluoride were dissolved in 38 parts by weight of N-methylpyrrolidone, and 50 parts by weight of LiCoO₂ as an active material and 9 parts by weight of graphite as a conductive agent were added thereto, mixed, and dispersed in an inactive gas atmosphere to form positive electrode material mixture. The mixture was applied onto both surfaces of a 20 µm thickness aluminum foil in an air atmosphere to form active material layers of uniform thickness. The aluminum foil carrying the active material layers was dried at 120°C for an hour, rolled to a thickness of 180 µm to form positive electrode plate material, from which positive electrode plates 7a were punched out. The positive electrode plates 7a were of the shape shown in Fig. 12A, the width of the layer faces 17a-17e being 22 mm.
   Meanwhile, 59 parts by weight of cokes sintered at 2500°C were added to a solution of 3 parts by weight of polyvinilydene fluoride in 38 parts by weight of N-methylpyrrolidone, and mixed and dispersed in an inactive gas atmosphere to form negative electrode material mixture. The mixture was applied onto both surfaces of a 20 µm thickness copper foil in an air atmosphere to form active material layers of uniform thickness. The copper foil carrying the active material layers was dried at 120°C for an hour, and rolled to a thickness of 200 µm to form negative electrode plate material, from which negative electrode plates 8a were punched out. The negative electrode plates 8a were of the shape shown in Fig. 12B, the width of the layer faces 18a-18e being 24 mm.
   The positive and negative electrode plates 7a and 8a prepared as described above were coiled around with 25 µm thickness microporous polyethylene films placed therebetween such that the layer faces 17a-17e and 18a-18e of respective electrode plates were layered, to form electrode plate groups 10 of about 2.8 mm thickness. Distal end part of the positive electrode leads 15 was welded to an inner face of cap cases 4 by ultrasonic welding, and distal end part of the negative electrode leads 16 was welded to an inner face of sealing cases 5 by resistance welding. The electrode plate groups 10 were accommodated in the sealing cases 5, and 500 µl of 1M LiPF₆/EC-EMC electrolyte was injected. The open end of the sealing cases 5 was sealed by the cap cases 4, with gaskets 6 fitted therebetween, to form battery D.
(2) Preparation of coin-type battery A
   The positive and negative electrode plates 7 and 8 of the electrode plate group 1 are not provided with positive and negative leads as shown in Fig. 3A and Fig. 3B. The electrical connection between the positive and negative electrode plates 7 and 8 of the electrode plate group 1 and the cap case 4/sealing case 5 is established by pressure contact, as shown in Fig. 1. For this pressure contact, the layer face 17e of the positive electrode plate 7 that becomes the outermost layer on the cap case 4 side is not coated with active material so that its collector is exposed. Likewise, the layer face 18e of the negative electrode plate 8 that becomes the outermost layer on the sealing case 5 side is left uncoated with active material so that its collector is exposed.

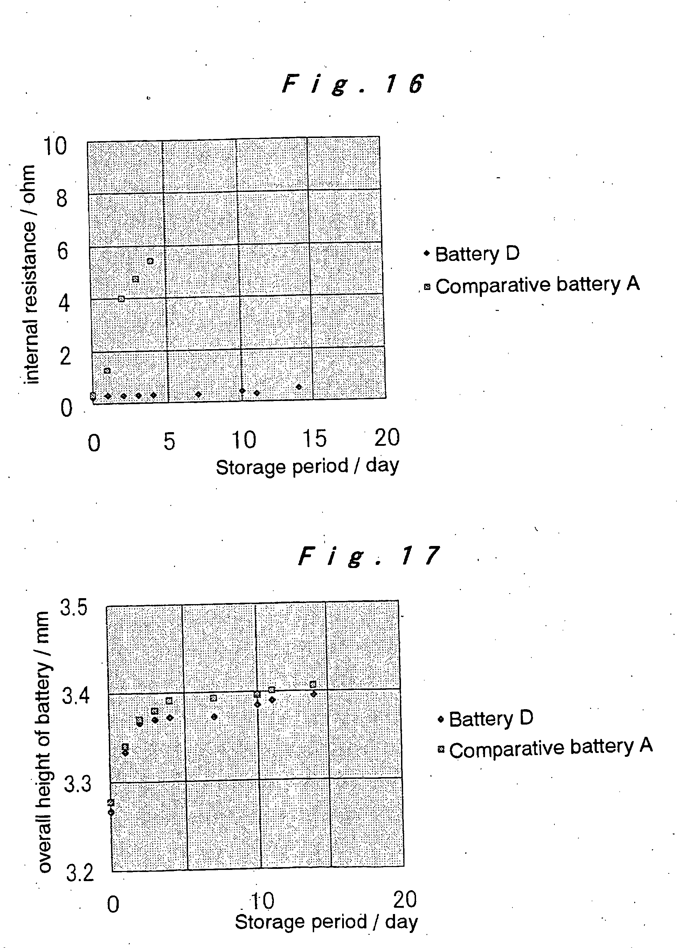

The batteries D and A prepared as described above were charged and discharged two times at constant current of 30 mA, and immediately after being charged again at 30 mA, they were stored in a tank heated at 85°C. The changes in the internal resistance and overall height of the batteries according to the number of storage dates were measured. The results are shown in Fig. 16 and Fig. 17.

As for the changes in the internal resistance shown in Fig. 16, in the battery D according to the second embodiment, as compared to the battery A, the internal resistance remained low throughout the storage period, whereas, in great contrast, it rose drastically in the battery A even before a few days have passed. Presumably, this was because the fact that the electrical connection was established by welding in the battery D. It is assumed, from the changes in the overall height of the battery in Fig. 17, that there was generation of gas inside the batteries. However, there was no large difference between the batteries D and A. Since there was no large difference in the changes in the overall height of the batteries, the large discrepancy in the internal resistance could be explained by an increase in the internal resistance in the battery in which electrical connection was achieved by pressure contact, because even slight swelling of the cap case 4 and the sealing case 5 by internal pressure rise would make the pressure contact unstable.

The above comparison shows that the welding of positive and negative electrode leads 15 and 16 extended from the electrode plate group 10 to the cap case 4/sealing case 5 respectively for the electrical connection will contribute to low internal resistance and stable current collecting properties, even with a rise in internal pressure, of coin type batteries.

Next, coin-type batteries according to third to fifth embodiments of the present invention will be described. The third to fifth embodiments are designed for resolving possible inconvenience in the coin type batteries according to the first and second embodiments. More specifically, the coin type batteries according to the following embodiments incorporate a feature that reduces release of lithium ions from the positive electrode plate into non-aqueous electrolyte during charge particularly from the vicinity of one end at the coiling center of the negative electrode plate. This feature suppresses deposition of lithium metal on the negative electrode, and thereby prevents deterioration of charge/discharge cycle life due to the electrodeposition and diminishes degradation of safety properties.

The coin type batteries according to the first and second embodiments were prepared in numbers and they were charged and discharged many times under various conditions so as to deliberately create the situation noted above, after which the batteries were disassembled for determining what had led to the situation. In a large percentage of batteries that showed malfunction, deposition of lithium metal was observed in the vicinity of the coiling end of the negative electrode plate. Accordingly, it was concluded that the malfunction was caused by condensation of lithium ions that were released from the positive electrode during charge in the vicinity of one end at the coiling center of the negative electrode plate, followed by deposition of lithium metal. In the batteries in which transition metal oxide is used for the positive electrode plate and carbon material is used for the negative electrode plate, charge and discharge reactions are caused by insertion and release of lithium ions, and so both electrode plates facing each other should have equal discharge capacities. In a cylindrical battery in which an electrode plate group of a coiled structure is employed, the electrode plates face each other in substantially the same area. The charge and discharge reactions are therefore not locally concentrated, and there is no such problem as noted above. Likewise, in the electrode plate group of the flat coiled structure according to the present invention, the layer face of the negative electrode plate in the innermost part of the coiling is arranged face-to-face with the layer face of the positive electrode plate through the separator, so the opposing positive and negative electrode plates should have approximately equal capacities. However, the very end of the negative electrode plate at the coiling center is actually surrounded by the connecting piece of the positive electrode that is nearest to the coiling center, and therefore there is a large unbalance of capacity between the opposing positive and negative electrode plates in this portion, i.e., the positive electrode has a larger capacity. Therefore, it is assumed that lithium ions released from the positive electrode during charge are not completely absorbed between layers of carbon material of the negative electrode plate, as a result of which residual lithium ions are electrodeposited on the surface of the negative electrode plate.

Based on this assumption, a measure is taken in the electrode plate group according to the third to fifth embodiments to reduce current density toward one end at the coiling center of the negative electrode plate so as to suppress the deposition of lithium metal: An insulating member is provided for covering an inner face of the connecting piece of the positive electrode plate nearest to the coiling center and opposite the coiling end of the negative electrode plate. This reduces lithium ions released from the connecting piece of the positive electrode plate and suppresses deposition of lithium metal on the opposing portion of the negative electrode plate. The insulating member should preferably be made of a material that blocks transmission of lithium ions.

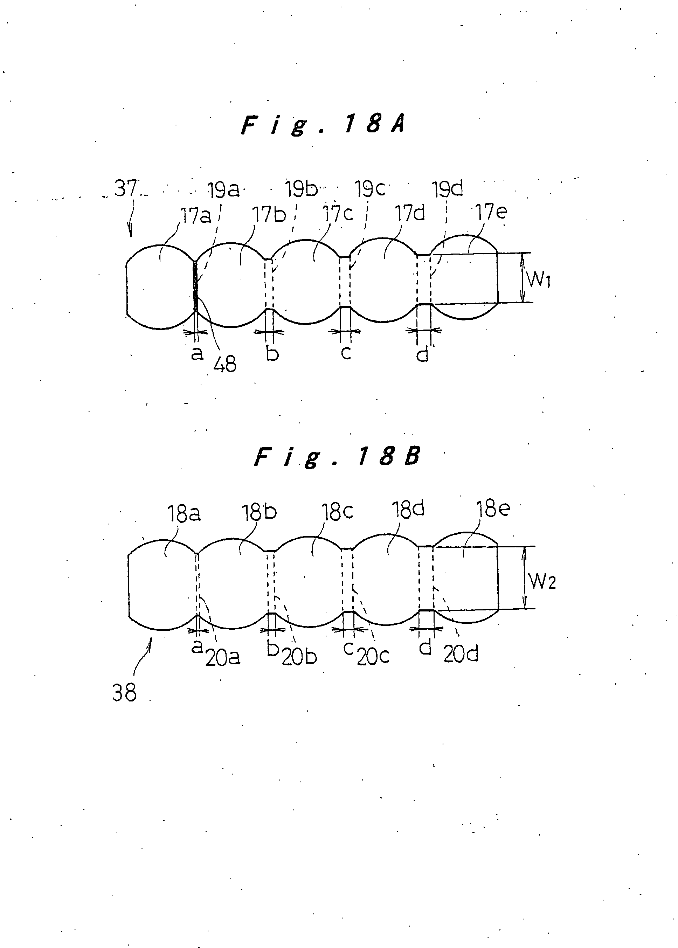

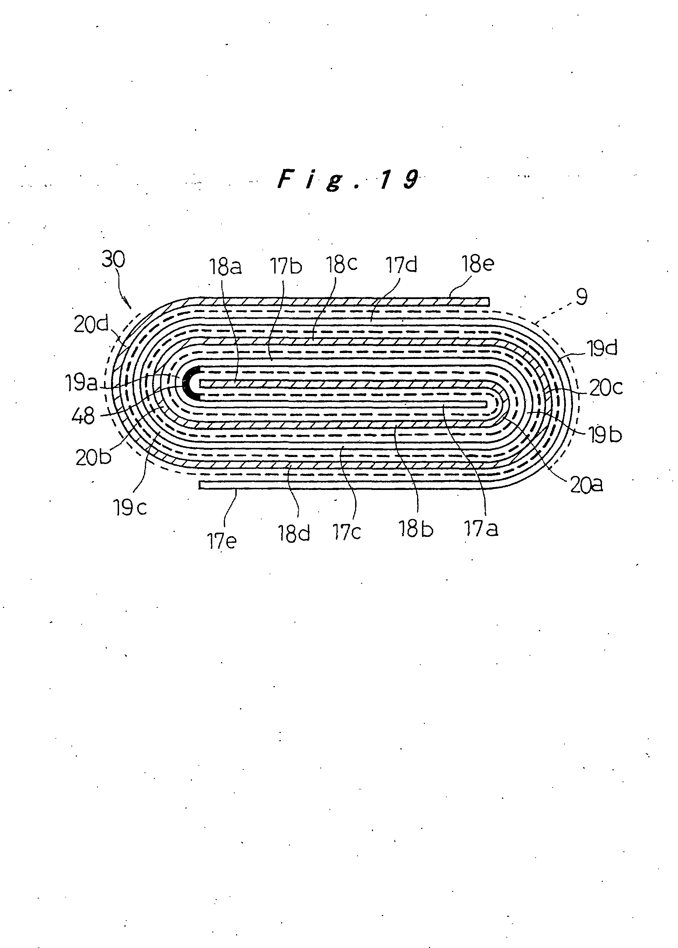

The coin type battery according to the third embodiment is constructed as shown in Fig. 1. The electrode plate group 30 used for this battery is comprised of a positive electrode plate 37 shown in Fig. 18A and a negative electrode plate 38 shown in Fig. 18B coiled around with a separator 9 placed therebetween, as shown in Fig. 19.

The positive electrode plate 37 is made of a punched plate material, which is obtained by coating positive electrode active materials on both sides of aluminum foil that constitutes a positive electrode collector, and formed into a strip having a predetermined number of layer faces 17a-17e formed with arcs in the widthwise directions and coupled together by connecting pieces 19a-19d as shown in Fig. 18A. An insulating member 48 is formed on the connecting piece 19a nearest to the coiling center of the positive electrode plate. It is located only on the face that will face the coiling end of the negative electrode plate 38 when the electrode plates are coiled around, as shown in Fig. 19. Preferably, the insulating member 48 is made of a material that can block transmission of lithium ions. It is also required to have chemical stability with respect to the non-aqueous solvent and with respect to the potential applied during charge. It is preferable in terms of productivity to form the insulating member 48 on the positive electrode plate 37 by applying a resin adhesive material, or, by bonding a resin tape coated with an adhesive that meets the above-noted requirements of stability and others. Adhesives chiefly consisting of polypropylene are preferably used together with tapes.

The negative electrode plate 38 is made of a punched plate material, which is obtained by coating negative electrode active materials on both sides of copper foil that constitutes a negative electrode collector, and formed into a strip having a predetermined number of layer faces 18a-18e formed with arcs in the widthwise directions and coupled together by connecting pieces 20a-20d as shown in Fig. 18B. The width of the negative electrode plate 38 is slightly larger than that of the positive electrode plate 37, so that there will be no decrease in the reaction area even when the positive electrode layer faces 17a-17e not in exact register with the negative electrode layer faces 18a-18e.

The positive and negative electrode plates 37 and 38 are coiled around by folding them at their respective connecting pieces 19a-19d and 20a-20d such that the positive electrode layer faces 17a-17e and negative electrode layer faces 18a-18e are alternately layered to face each other through the separator 9, as shown in the model view of Fig. 19. As illustrated, the insulating member 48 formed on the connecting piece 19a of the positive electrode is arranged in a position opposite the coiling end of the negative electrode plate 38. The separator 9 is made of microporous polyethylene film and formed as a tape having a larger width than that of the negative electrode plate 38. After coiling the positive and negative electrode plates 37 and 38 with the separator 9, the four corners of the separator are cut off along an arc, so that the complete electrode plate group 30 is of a disk-like shape.

In order to coil the positive and negative electrode plates 37 and 38 so that the layer faces 17a-17e and 18a-18e of both electrode plates are in exact register, the connecting pieces 19a-19d and 20a-20d of both electrode plates need to have increasing lengths along the connecting direction such that connecting pieces on the outer side of the coiling are longer. As shown in Fig. 18A and Fig. 18B, the length (a) at the coiling start end is increased stepwise to the length (d) at the coiling finish end, each by the sum of the thicknesses of the positive and negative electrode plates 37 and 38 and separator 9.

The width W1 of the connecting pieces 19a-19d of the positive electrode and the width W2 of the connecting pieces 20a-20d of the negative electrode need to be largest possible so as to prevent a decrease in the battery voltage during charge and discharge with a large current. On the other hand, it is preferable that the widths W1 and W2 of the positive and negative electrode connecting pieces 19a-19d and 20a-20d be small so as to accommodate the electrode plate group 30 within the circular space in the sealing case 5 with good volume efficiency. The widths W1 and W2 of the connecting pieces 19a-19d and 20a-20d should be determined such as to achieve a good balance between the degree of the decrease in the battery voltage and the volume efficiency.

The electrode plate group 30 constructed as described above is accommodated in the sealing case 5. The sealing case 5 is then filled with liquid electrolyte, and the cap case 4 is coupled upon the open end of the sealing case 5, with the gasket 6 fitted therebetween. The open end edge of the cap case 4 is crimped or bent inwards so as to form the coin type battery.

In this coin type battery according to the third embodiment, since the insulating member 48 is formed on the positive electrode plate 37 opposite the coiling end and its vicinity of the negative electrode plate 38, the number of lithium ions released from the positive electrode plate 37 during charge into the non-aqueous electrolyte is reduced, whereby deposition of lithium metal on the negative electrode plate 38 is suppressed. This diminishes the deterioration of charge and discharge cycle life and the degradation of safety properties.

The following is a description of a coin type battery according to the fourth embodiment. Instead of the insulating member 48 formed on the connecting piece 19a of the positive electrode in the third embodiment, the corresponding portion is left uncoated with the positive electrode active material in the coin type battery of the fourth embodiment.

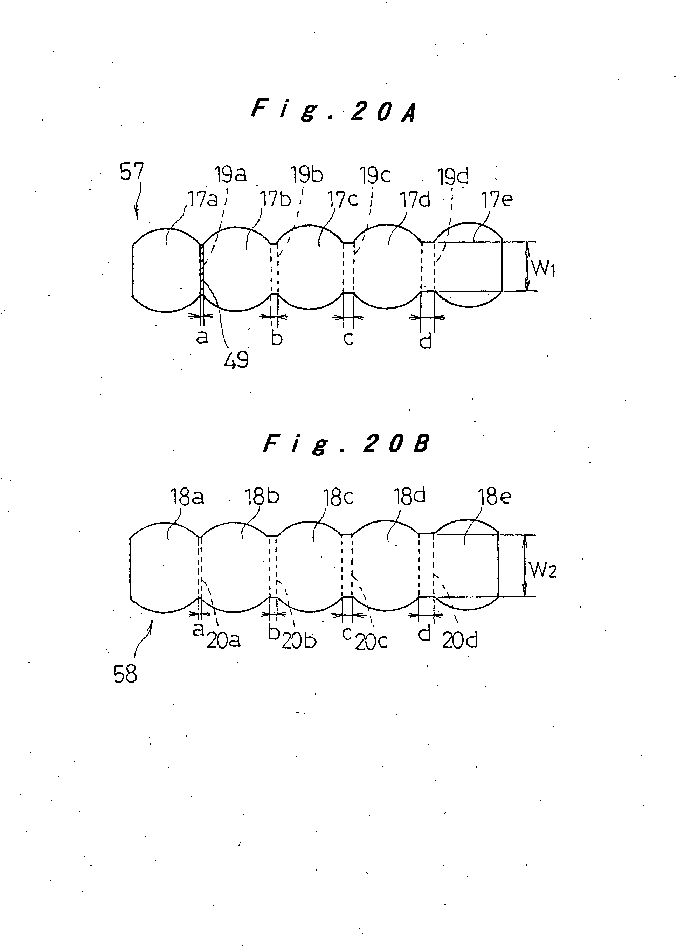

The positive electrode plate 57 is made of a punched plate material, which is obtained by coating positive electrode active materials on both sides of aluminum foil that constitutes a positive electrode collector, and formed into a strip having a predetermined number of layer faces 17a-17e formed with arcs in the widthwise directions and coupled together by connecting pieces 19a-19d as shown in Fig. 20A. The connecting piece 19a nearest to the coiling center of the positive electrode is the portion 49 left uncoated. This portion does not contribute to any discharge reaction. The uncoated portion 49 will directly face one end at the coiling center of the negative electrode plate 58 shown in Fig. 20B, when the negative electrode plate 58 and the separator 9 are coiled around together.

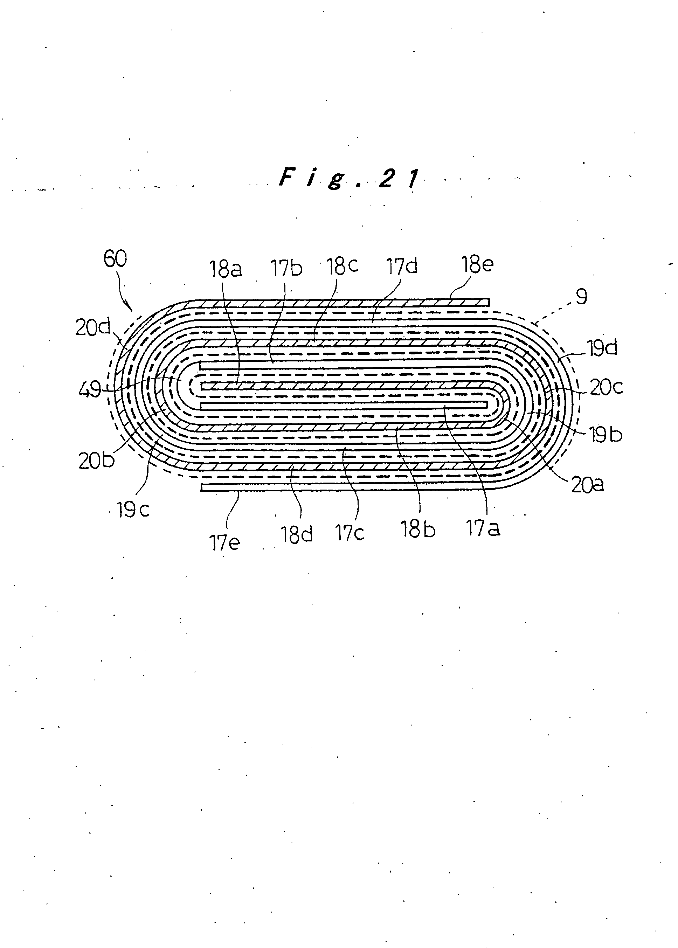

The positive and negative electrode plates 57 and 58 are coiled around by folding them at their respective connecting pieces 19a-19d and 20a-20d such that the positive electrode layer faces 17a-17e and negative electrode layer faces 18a-18e are alternately layered to face each other through the separator 9, as shown in the model view of Fig. 21. The uncoated portion 49 provided on the connecting piece 19a is arranged in a position directly opposite the coiling end of the negative electrode plate 58 at the coiling center. In this coin type battery according to the fourth embodiment, the uncoated portion 49 is provided in the positive electrode plate 57 opposite one end at the coiling center and its vicinity of the negative electrode plate 58, i.e., the inner face of the connecting piece 19a of the positive electrode plate 57 that faces the coiling end of the negative electrode plate 58, where deposition of lithium metal is most likely to occur, is not coated with the positive electrode active material. Thereby, the number of lithium ions released from the positive electrode plate 57 during charge into the non-aqueous electrolyte is reduced in the vicinity of the coiling end of the negative electrode plate 58. This diminishes the deterioration of charge and discharge cycle life and the degradation of safety properties resulting from buildup of lithium metal on the surface of negative electrode.

The following is a description of a coin type battery according to the fifth embodiment. Instead of the insulating member 48 formed on the connecting piece 19a of the positive electrode in the third embodiment, an insulating member 50 is provided at the coiling end of the negative electrode plate 68.

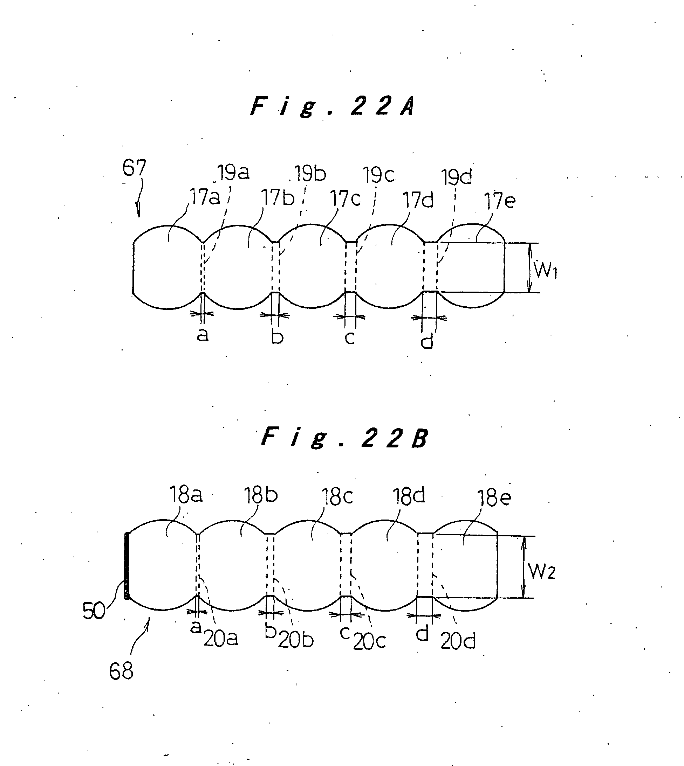

The positive electrode plate 67 is made of a punched plate material, which is obtained by coating positive electrode active materials on both sides of aluminum foil that constitutes a positive electrode collector, and formed into a strip having a predetermined number of layer faces 17a-17e formed with arcs in the widthwise directions and coupled together by connecting pieces 19a-19d as shown in Fig. 22A.

The negative electrode plate 68 is made of a punched plate material, which is obtained by coating negative electrode active materials on both sides of copper foil that constitutes a negative electrode collector, and formed into a strip having a predetermined number of layer faces 18a-18e formed with arcs in the widthwise directions and coupled together by connecting pieces 20a-20d as shown in Fig. 22B. The insulating member 50 is formed at the coiling end of the negative electrode plate 68, so that, when the positive and negative electrode plates 67 and 68 are coiled around with the separator 9 interposed therebetween, the coiling end of the negative electrode plate 68 that faces the connecting piece 19a of the positive electrode will be covered by the insulating member 50.

The insulating member 50 should preferably be made of a material that blocks transmission of lithium ions. It is also required to have chemical stability with respect to the non-aqueous solvent and with respect to the potential applied during charge. It is preferable in terms of productivity to form the insulating member on the negative electrode plate 68 by applying a resin adhesive material, or, by bonding a resin tape coated with an adhesive that meets the above-noted requirements of stability and others. Adhesives chiefly consisting of polypropylene are preferably used together with tapes.

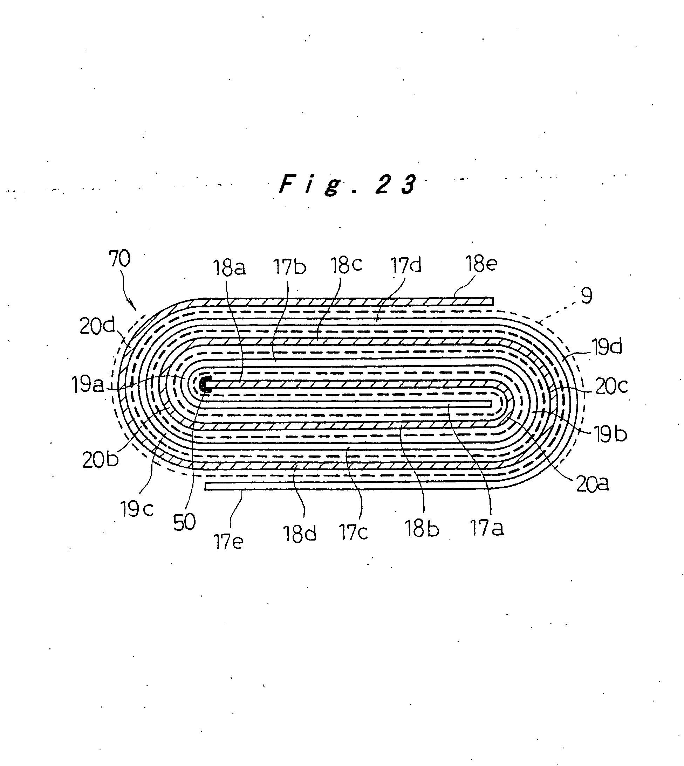

The positive and negative electrode plates 67 and 68 are coiled around to form an electrode plate group 70 by folding them at their respective connecting pieces 19a-19d and 20a-20d such that the positive electrode layer faces 17a-17e and negative electrode layer faces 18a-18e are alternately layered face-to-face through the separator 9, as shown in the model view of Fig. 23. The insulating member 50 formed at the coiling end of the negative electrode plate 68 is arranged in a position directly opposite the connecting piece 19a of the positive electrode.

In this coin type battery according to the fifth embodiment, the insulating member 50 is provided to cover the coiling end of the negative electrode plate 68 where deposition of lithium metal is most likely to occur. Providing such a feature that prevents deposition of lithium metal on the surface of the coiling end of the negative electrode plate 68 diminishes the deterioration of charge and discharge cycle life and the degradation of safety properties.

The following is a description of specific examples of coin type batteries according to the above-described third to fifth embodiments that were prepared for investigating the conditions of deposition of lithium metal.

3 parts by weight of polyvinilydene fluoride were dissolved in 38 parts by weight of N-methylpyrrolidone, and 50 parts by weight of LiCoO₂ as an active material and 9 parts by weight of graphite as a conductive agent were added thereto, mixed, and dispersed in an inactive gas atmosphere to form positive electrode material mixture. The mixture was applied onto both surfaces of a 20 µm thickness aluminum foil in an air atmosphere to form active material layers of uniform thickness. The aluminum foil carrying the active material layers was rolled to a thickness of 180 µm to form positive electrode plate material, which was then dried at 120°C for an hour, after which positive electrode plates 37 as shown in Fig. 18A having 22 mm width layer faces 17a-17e were punched out therefrom. Insulating members 48 were formed in the areas of the connecting pieces 19a of the positive electrode plates 37. The insulating members 48 were formed by applying and setting an adhesive chiefly composed of polypropylene.

59 parts by weight of cokes sintered at 2500°C were added to a solution of 3 parts by weight of polyvinilydene fluoride in 38 parts by weight of N-methylpyrrolidone, and mixed and dispersed in an inactive gas atmosphere to form negative electrode material mixture. The mixture was applied onto both surfaces of a 20 µm thickness copper foil in an air atmosphere to form active material layers of uniform thickness. The copper foil carrying the active material layers was rolled to a thickness of 200 µm to form negative electrode plate material, which was then dried at 120°C for an hour, after which negative electrode plates 38 as shown in Fig. 18B having 24 mm width layer faces 18a-18e were punched out therefrom.

The positive and negative electrode plates 37 and 38 prepared as described above were coiled around with 25 µm thickness microporous polyethylene films placed therebetween such that the layer faces 17a-17e and 18a-18e of respective electrode plates were layered, to form electrode plate groups 30 of about 2.8 mm thickness. The electrode plate groups 30 were accommodated in sealing cases 5, and 500 µl of 1M LiPF₆/EC-EMC electrolyte, was injected. The open end of the sealing cases 5 was sealed by cap cases 4, with gaskets 6 fitted therebetween. This encasing operation was conducted in a dry air atmosphere. The electrical connection between the electrode plate groups 30 and the cap cases 4/sealing cases 5 was established by pressure contact therebetween. The coin type battery according to the third embodiment thus obtained is defined as battery E.

Further, the coin type battery according to the fourth embodiment was prepared using a positive electrode plate 57 having an uncoated portion 49 in the positive electrode connecting piece 19a, with other features being the same as those of battery E, and this is defined as battery F. Likewise, the coin type battery according to the fifth embodiment was prepared using a negative electrode plate 68 having an insulating member 50 at its coiling end, with other features being the same as those of battery E, and this is defined as battery G. Further, as a comparison example, battery A was prepared, which is the coin type battery according to the first embodiment, in which there are no insulating members 48, 50 or uncoated portion 49.

After repeating charge and discharge, these coin type batteries E, F, G, and A were disassembled to investigate the state of deposition of lithium metal at the coiling end of the negative electrode plate. Charge and discharge were repeated 200 cycles at constant current of 100 mA between 4.2V and 3.0V.

No deposition of lithium metal was observed at the coiling end of the negative electrode plate in any of batteries E, F, and G, but there was a slight deposition of lithium metal on the surface of negative electrode in the comparative example, battery A. The amount of deposition was negligible enough not to deteriorate the battery characteristics, since charge and discharge were repeated only 200 cycles.

The above test results show that there is a possibility, in the coin type battery using the electrode plate group 1 and 10 of the coiled structure, of problems resulting from deposition of lithium metal after repeated charge and discharge. Thus it is preferable to provide a feature that prevents deposition of lithium metal such as those in the electrode plate groups 30, 60, and 70 of the third to fifth embodiments so as to increase the discharge capacity.

### INDUSTRIAL APPLICABILITY

As described above, according to the present invention, it is possible to improve the discharge characteristics of coin type battery, reduce its internal resistance, suppress the occurrence of troubles caused by deposition of lithium metal, and maintain the safety properties and charge/discharge cycle characteristics over a long period of time. Coin type batteries can thereby be applied for a wider range of devices. The present invention is thus advantageous for the realization of even smaller, thinner, and more light weight portable devices with higher reliability.

## Claims

1. A coin type battery comprising:
a positive electrode plate (7) including a positive electrode collector coated with a positive electrode active material and a negative electrode plate (8) including a negative electrode collector coated with a negative electrode active material, respectively formed in a strip shape having a plurality of layer faces coupled together by connecting pieces;
an electrode plate group (1) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a battery case for accommodating the electrode plate group, the battery case including a shallow bottomed cylindrical cap case (4) having an open end and a sealing case (5) for sealing the open end of the cap case.

2. The coin type battery according to claim 1, wherein the positive electrode plate and the negative electrode plate are coiled around such that the electrode plate group (1) has a positive electrode layer face at one end of the positive electrode plate (7) on one side face, and a negative electrode layer face at one end of the negative electrode plate (8) on the other side face.

3. The coin type battery according to claim 1, wherein the connecting pieces have differing lengths that increase stepwise in a connecting direction from an inner side to an outer side of coiled electrode plates.

4. The coin type battery according to claim 1, wherein the connecting pieces have a width orthogonal to a connecting direction larger than a predetermined value.

5. The coin type battery according to claim 1, wherein the layer faces and the connecting pieces of the strip-like positive electrode plate (7) and the negative electrode plate (8) have a same width.

6. The coin type battery according to claim 1, wherein the layer faces of the positive electrode plate (7) and the negative electrode plate (8) are of circular form conforming to a circular accommodating space of the battery case.

7. The coin type battery according to claim 1, wherein the layer faces of the positive electrode plate (7) and the negative electrode plate (8) are of polygonal form conforming to a circular accommodating space of the battery case.

8. The coin type battery according to claim 1, wherein the positive electrode plate (7) has an exposed face of the positive electrode collector in a layer face (17e) that is located outermost of the electrode plate group (1), and the negative electrode plate (8) has an exposed face of the negative electrode collector in a layer face (18e) that is located outermost of the electrode plate group (1).

9. The coin type battery according to claim 1, wherein the electrode plate group (1) includes a positive electrode lead (15) extended from one end of the positive electrode plate (7) in a direction of length of the electrode plate and welded to the cap case, and a negative electrode lead (16) extended from one end of the negative electrode plate (8) in a direction of length of the electrode plate and welded to the sealing case.

10. A coin type battery comprising:
a positive electrode plate (41) including a positive electrode collector coated with a positive electrode active material and a negative electrode plate (42) including a negative electrode collector coated with a negative electrode active material, respectively formed in a strip shape having a plurality of layer faces coupled together by connecting pieces;
an electrode plate group (40) of flat form, formed by superposing the positive electrode plate and the negative electrode plate so that respective faces of both electrode plates on which the active materials are coated face each other through a separator (9), and folding the positive electrode plate and the negative electrode plate alternately in opposite directions at the respective connecting pieces and compressing the electrode plates such that the layer faces (51) of the positive electrode plate and the layer faces (72) of the negative electrode plate are layered upon one another; and
a battery case for accommodating the electrode plate group, the battery case including a shallow bottomed cylindrical cap case (4) having an open end and a sealing case (5) for sealing the open end of the cap case.

11. A coin type battery comprising:
a positive electrode plate (7a) including a positive electrode collector coated on both faces with a positive electrode active material and a negative electrode plate (8a) including a negative electrode collector coated on both faces with a negative electrode active material, respectively formed in a strip shape having a plurality of layer faces coupled together by connecting pieces;
a positive electrode lead (15) formed by extending the positive electrode collector from one end of the positive electrode plate, and a negative electrode lead (16) formed by extending the negative electrode collector from one end of the negative electrode plate;
an electrode plate group (10) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween, the positive electrode lead and the negative electrode lead arranged at a coiling finish end; and
a battery case for accommodating the electrode plate group, the battery case including a shallow bottomed cylindrical cap case (4) having an open end and a sealing case (5) for sealing the open end of the cap case, wherein
a distal end of the positive electrode lead is welded to the cap case (4) and a distal end of the negative electrode lead is welded to the sealing case (5).

12. The coin type battery according to claim 11, wherein the connecting pieces have differing lengths that increase stepwise in a connecting direction from an inner side to an outer side of coiled electrode plates.

13. The coin type battery according to claim 11, wherein the connecting pieces have a width orthogonal to a connecting direction larger than a predetermined value.

14. The coin type battery according to claim 11, wherein the layer faces of the positive electrode plate (7a) and the negative electrode plate (8a) are of circular form conforming to a circular accommodating space of the battery case.

15. The coin type battery according to claim 11, wherein the layer faces of the positive electrode plate (7a) and the negative electrode plate (8a) are of polygonal form conforming to a circular accommodating space of the battery case.

16. The coin type battery according to claim 11, wherein the positive electrode collector is made of aluminum foil, and the cap case (4) is made of a clad material having an inner face made of aluminum and an outer face made of stainless steel.

17. The coin type battery according to claim 11, wherein the negative electrode collector is made of copper foil, the sealing case (5) is made of stainless steel, and the negative electrode collector is welded to the sealing case by resistance welding as being held between an inner face of the sealing case and a stainless steel or nickel plate.

18. A coin type battery comprising:
a positive electrode plate (41) including a positive electrode collector coated on one face with a positive electrode active material and a negative electrode plate (42) including a negative electrode collector coated on one face with a negative electrode active material, respectively formed in a strip shape having a plurality of layer faces coupled together by connecting pieces;
a positive electrode lead (15) formed by extending the positive electrode collector from one end of the positive electrode plate, and a negative electrode lead (16) formed by extending the negative electrode collector from one end of the negative electrode plate;
an electrode plate group (55) of flat form, formed by superposing the positive electrode plate and the negative electrode plate so that respective faces of both electrode. plates on which the active materials are coated face each other through a separator (9), and folding the positive electrode plate and the negative electrode plate alternately in opposite directions at the respective connecting pieces and compressing the electrode plates such that the layer faces (50) of the positive electrode plate and the layer faces (52) of the negative electrode plate are layered upon one another; and
a battery case for accommodating the electrode plate group, the battery case including a shallow bottomed cylindrical cap case (4) having an open end and a sealing case (5) for sealing the open end of the cap case, wherein
a distal end of the positive electrode lead is welded to the cap case (4) and a distal end of the negative electrode lead is welded to the sealing case (5).

19. A coin type battery comprising:
a positive electrode plate (37) including a positive electrode collector coated with a positive electrode active material chiefly composed of a transition metal oxide, and a negative electrode plate (38) including a negative electrode collector coated with a negative electrode active material for absorbing and releasing lithium, respectively formed in a strip shape having a plurality of layer faces coupled together by connecting pieces;
an electrode plate group (30) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a flat battery case for accommodating the electrode plate group, wherein
the positive electrode plate includes an insulating member (48) for covering one face of a connecting piece that is to be located at the center of the coiled electrode plate group, said one face of the connecting piece being opposite one end of the negative electrode plate.

20. A coin type battery comprising:
a positive electrode plate (57) including a positive electrode collector coated with a positive electrode active material chiefly composed of a transition metal oxide, and a negative electrode plate (58) including a negative electrode collector coated with a negative electrode active material for absorbing and releasing lithium, respectively formed in a strip shape having a plurality of layer faces coupled together by connecting pieces;
an electrode plate group (60) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a flat battery case for accommodating the electrode plate group, wherein
the positive electrode plate includes an uncoated portion where no positive electrode active material is applied in one face of a connecting piece that is to be located at the center of the coiled electrode plate group, said one face of the connecting piece being opposite one end of the negative electrode plate.

21. A coin type battery comprising:
a positive electrode plate (67) including a positive electrode collector coated with a positive electrode active material chiefly composed of a transition metal oxide and a negative electrode plate (68) including a negative electrode collector coated with a negative electrode active material for absorbing and releasing lithium, respectively formed in a strip shape having a plurality of layer faces coupled together by connecting pieces;
an electrode plate group (70) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a flat battery case for accommodating the electrode plate group, wherein
the negative electrode plate includes an insulating member (50) for covering one end thereof that is to be located at the center of the coiled electrode plate group.

## Amended claims

### Amended claims under Art. 19.1 PCT

**1.** A coin type battery comprising:
a positive electrode plate (7) including a positive electrode collector coated with a positive electrode active material and a negative electrode plate (8) including a negative electrode collector coated with a negative electrode active material, respectively formed in a strip shape having a plurality of layer faces coupled together by connecting pieces;
an electrode plate group (1) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a battery case for accommodating the electrode plate group, the battery case including a shallow bottomed cylindrical cap case (4) having an open end and a sealing case (5) for sealing the open end of the cap case, wherein
the connecting pieces have a width orthogonal to a connecting direction smaller than that of the layer faces, and
the connecting pieces have differing lengths that increase stepwise in the connecting direction from an inner side to an outer side of the coiled electrode plate group.

**2.** The coin type battery according to claim 1, wherein the positive electrode plate and the negative electrode plate are coiled around such that the electrode plate group (1) has a positive electrode layer face at one end of the positive electrode plate (7) on one side face, and a negative electrode layer face at one end of the negative electrode plate (8) on the other side face.

**3.** The coin type battery according to claim 1, wherein the positive electrode plate (7) has an exposed face of the positive electrode collector in a layer face (17e) that is located outermost of the electrode plate group (1), and the negative electrode plate (8) has an exposed face of the negative electrode collector in a layer face (18e) that is located outermost of the electrode plate group (1).

**4.** The coin type battery according to claim 1, wherein the electrode plate group (1) includes a positive electrode lead (15) extended from one end of the positive electrode plate (7) in a direction of length of the electrode plate and welded to the cap case, and a negative electrode lead (16) extended from one end of the negative electrode plate (8) in a direction of length of the electrode plate and welded to the sealing case.

**5.** A coin type battery comprising:
a positive electrode plate (41) including a positive electrode collector coated with a positive electrode active material and a negative electrode plate (42) including a negative electrode collector coated with a negative electrode active material, respectively formed in a strip shape having a plurality of layer faces coupled together by connecting pieces;
an electrode plate group (40) of flat form, formed by superposing the positive electrode plate and the negative electrode plate so that respective faces of both electrode plates on which the active materials are coated face each other through a separator (9), and folding the positive electrode plate and the negative electrode plate alternately in opposite directions at the respective connecting pieces and
compressing the electrode plates such that the layer faces (51) of the positive electrode plate and the layer faces (72) of the negative electrode plate are layered upon one another; and
a battery case for accommodating the electrode plate group, the battery case including a shallow bottomed cylindrical cap case (4) having an open end and a sealing case (5) for sealing the open end of the cap case.

**6.** A coin type battery comprising:
a positive electrode plate (7a) including a positive electrode collector coated on both faces with a positive electrode active material and a negative electrode plate (8a) including a negative electrode collector coated on both faces with a negative electrode active material, respectively formed in a strip shape having a plurality of layer faces coupled together by connecting pieces;
a positive electrode lead (15) formed by extending the positive electrode collector from one end of the positive electrode plate, and a negative electrode lead (16) formed by extending the negative electrode collector from one end of the negative electrode plate;
an electrode plate group (10) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween, the positive electrode lead and the negative electrode lead arranged at a coiling finish end; and
a battery case for accommodating the electrode plate group, the battery case including a shallow bottomed cylindrical cap case (4) having an open end and a sealing case (5) for sealing the open end of the cap case, wherein
a distal end of the positive electrode lead is welded to the cap case (4) and a distal end of the negative electrode lead is welded to the sealing case (5).

**7.** The coin type battery according to claim 6, wherein the connecting pieces have differing lengths that increase stepwise in a connecting direction from an inner side to an outer side of coiled electrode plates.

**8.** The coin type battery according to claim 1 or 6, wherein the layer faces of the positive electrode plate (7, 7a) and the negative electrode plate (8, 8a) are of circular or polygonal form conforming to a circular accommodating space of the battery case.

**9.** The coin type battery according to claim 6, wherein the positive electrode collector is made of aluminum foil, and the cap case (4) is made of a clad material having an inner face made of aluminum and an outer face made of stainless steel.

**10.** The coin type battery according to claim 6, wherein the negative electrode collector is made of copper foil, the sealing case (5) is made of stainless steel, and the negative electrode collector is welded to the sealing case by resistance welding as being held between an inner face of the sealing case and a stainless steel or nickel plate.

**11.** A coin type battery comprising:
a positive electrode plate (41) including a positive electrode collector coated on one face with a positive electrode active material and a negative electrode plate (42) including a negative electrode collector coated on one face with a negative electrode active material, respectively formed in a strip shape having a plurality of layer faces coupled together by connecting pieces;
a positive electrode lead (15) formed by extending the positive electrode collector from one end of the positive electrode plate, and a negative electrode lead (16) formed by extending the negative electrode collector from one end of the negative electrode plate;
an electrode plate group (55) of flat form, formed by superposing the positive electrode plate and the negative electrode plate so that respective faces of both electrode plates on which the active materials are coated face each other through a separator (9), and folding the positive electrode plate and the negative electrode plate alternately in opposite directions at the respective connecting pieces and compressing the electrode plates such that the layer faces (50) of the positive electrode plate and the layer faces (52) of the negative electrode plate are layered upon one another; and
a battery case for accommodating the electrode plate group, the battery case including a shallow bottomed cylindrical cap case (4) having an open end and a sealing case (5) for sealing the open end of the cap case, wherein
a distal end of the positive electrode lead is welded to the cap case (4) and a distal end of the negative electrode lead is welded to the sealing case (5).

**12.** A coin type battery comprising:
a positive electrode plate (37) including a positive electrode collector coated with a positive electrode active material chiefly composed of a transition metal oxide, and a negative electrode plate (38) including a negative electrode collector coated with a negative electrode active material for absorbing and releasing lithium, respectively formed in a strip shape having a plurality of layer faces coupled together by connecting pieces;
an electrode plate group (30) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a flat battery case for accommodating the electrode plate group, wherein
the positive electrode plate includes an insulating member (48) for covering one face of a connecting piece that is to be located at the center of the coiled electrode plate group, said one face of the connecting piece being opposite one end of the negative electrode plate.

**13.** A coin type battery comprising:
a positive electrode plate (57) including a positive electrode collector coated with a positive electrode active material chiefly composed of a transition metal oxide, and a negative electrode plate (58) including a negative electrode collector coated with a negative electrode active material for absorbing and releasing lithium, respectively formed in a strip shape having a plurality of layer faces coupled together by connecting pieces;
an electrode plate group (60) of flat form, formed by folding the positive electrode plate and the negative electrode plate at the respective connecting pieces and coiling around the electrode plates such that the layer faces (17a-17e) of the positive electrode plate and the layer faces (18a-18e) of the negative electrode plate are alternately layered upon one another with a separator (9) interposed therebetween; and
a flat battery case for accommodating the electrode plate group, wherein
the connecting pieces have a width orthogonal to a connecting direction smaller than that of the layer faces,
the connecting pieces have differing lengths that increase stepwise in the connecting direction from an inner side to an outer side of the coiled electrode plate group, and
the positive electrode plate includes an uncoated portion where no positive electrode active material is applied in one face of a connecting piece that is to be located at the center of the coiled electrode plate group, said one face of the connecting piece being opposite one end of the negative electrode plate.

**14.** A coin type battery comprising:
a positive electrode plate (67) including a positive electrode collector coated with a positive electrode active material chiefly composed of a transition metal oxide and a negative electrode plate (68) including a negative electrode collector coated with a negative electrode active material for absorbing and releasing lithium, respectively formed in a strip shape having a plurality of layer faces coupled together by connecting pieces;
an electrode plate group (70) of flat form, formed by folding the positive electrode plate and the negative electrode plate at the respective connecting pieces and coiling around the electrode plates such that the layer faces (17a-17e) of the positive electrode plate and the layer faces (18a-18e of the negative electrode plate are alternately layered upon one another with a separator (9) interposed therebetween; and
a flat battery case for accommodating the electrode plate group, wherein
the connecting pieces have a width orthogonal to a connecting direction smaller than that of the layer faces,
the connecting pieces have differing lengths that increase stepwise in the connecting direction from an inner side to an outer side of the coiled electrode plate group, and
the negative electrode plate includes an insulating member (50) for covering one end thereof that is to be located at the center of the coiled electrode plate group.
